# EUROPEAN PATENT APPLICATION

(11) **EP 4 716 358 A2**
(43) Date of publication of application: **25.03.2026**
(21) Application number: 26156680.6
(22) Date of filing: 09.05.2024
(51) Int. Cl.: H04W 76/27

(54) **METHOD AND APPARATUS FOR IMPROVING A MOBILITY IN A TELECOMMUNICATION NETWORK**

(30) Priority: 12.05.2023 GB 202307070; 15.06.2023 GB 202308969; 12.04.2024 GB 202405273
(62) Divisional of application: 24807431.2
(71) Applicant: Samsung Electronics Co., Ltd., Suwon-si, Gyeonggi-do 16677 (KR)
(72) Inventor: KIM, Donggun, 16677 Suwon-si (KR)
(74) Representative: Nederlandsch Octrooibureau

(57) **Abstract**

The disclosure relates to a 5G or 6G communication system for supporting a higher data transmission rate.

Disclosed is a method of performing a L1/L2 Triggered Mobility, LTM, cell switch in a telecommunication system, comprising the steps of: a User Equipment, UE, being configured with an LTM candidate cell configuration by receiving a reconfiguration message, via RRC, from a telecommunication network, the message including the LTM candidate cell configuration; applying the LTM candidate cell configuration for a target cell indicated in a received MAC Control Element, CE, upon receipt of an LTM triggering MAC CE from the network; performing LTM cell switch to the target cell upon the reception of LTM triggering MAC CE; and sending a reconfiguration complete message to the target cell during the LTM switch procedure.

## Description

### [Technical Field]

Certain examples of the present disclosure provide method and apparatur for improving a mobility in a telecommunication network. For example, the present invention relates to improvements to Level 1 / Level 2 Triggered Mobility.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The present invention has been made to address at least the above problems and/or disadvantages and to provide at least the advantages described below. Accordingly, an aspect of the present invention provides a method and apparatus for improving a mobility in a telecommunication network.

### [Solution to Problem]

According to the present invention there is provided an apparatus and method as set forth in the appended claims. Other features of the invention will be apparent from the dependent claims, and the description which follows.

In one embodiment, a method performed by user equipment (UE) in a wireless communication system is provided. The method comprising: receiving, from a base station, a radio resource control (RRC) reconfiguration message including LTM configuration information; transmitting, to the base station, a first RRC reconfiguration complete message; based on the LTM configuration information, performing an LTM cell switch to a target cell of the base station; and transmitting, to the target cell of the base station, a second RRC reconfiguration complete message.

In one embodiment, a method performed by base station in a wireless communication system is provided. The method comprising: transmitting, to a user equipment (UE), a radio resource control (RRC) reconfiguration message including LTM configuration information; receiving, from the UE, a first RRC reconfiguration complete message; and based on the LTM configuration information, receiving, from the UE, a second RRC reconfiguration complete message, wherein the second RRC reconfiguration complete message is received after an LTM cell switch.

In one embodiement, a user equipment (UE) in a wireless communication system is provided. The UE comprises: a transceiver; and a controller configured to: receive, from a base station, a radio resource control (RRC) reconfiguration message including LTM configuration information, transmit, to the base station, a first RRC reconfiguration complete message, based on the LTM configuration information, perform an LTM cell switch to a target cell of the base station, and transmit, to the target cell of the base station, a second RRC reconfiguration complete message.

In one embodiement, a base station in a wireless communication system is provided. The base station comprises: a transceiver; and a controller configured to: transmit, to a user equipment (UE), a radio resource control (RRC) reconfiguration message including LTM configuration information, receive, from the UE, a first RRC reconfiguration complete message, and based on the LTM configuration information, receive, from the UE, a second RRC reconfiguration complete message, wherein the second RRC reconfiguration complete message is received after an LTM cell switch.

According to a first aspect of the invention, there is provided a method of performing a L1/L2 Triggered Mobility, LTM, cell switch in a telecommunication system, comprising the steps of: a User Equipment, UE, being configured with an LTM candidate cell configuration by receiving a reconfiguration message, via RRC, from a telecommunication network, the message including the LTM candidate cell configuration; applying the LTM candidate cell configuration for a target cell indicated in a received MAC Control Element, CE, upon receipt of an LTM triggering MAC CE from the network; performing LTM cell switch to the target cell upon the reception of LTM triggering MAC CE; and sending a reconfiguration complete message to the target cell during the LTM switch procedure.

In an embodiment, the message including the LTM candidate cell configuration is sent via Signalling Radio Bearer 1, SRB1;

In an embodiment, the UE sends a Measurement Report to the network before being configured.

In an embodiment, the UE stores the LTM candidate cell configuration before sending the reconfiguration complete message.

In an embodiment, MAC CE from the network includes a candidate configuration index of the target cell.

In an embodiment, if the LTM candidate cell configuration is sent via Signalling Radio Bearer 1, SRB1, then a RRCReconfgurationComplete message is sent to lower layers for transmission using the new configuration.

In an embodiment, the UE is configured with a plurality of candidate cell configurations.

In an embodiment, upon the network initiating the RRC reconfiguration procedure to the UE in RRC_CONNECTED mode, LTM configuration on a Master Cell Group, MCG, is only included when Access Stratum, AS, security has been activated and SRB2, with at least one Data Radio Bearer, DRB, are setup and not suspended.

According to a second aspect of the invention, there is provided apparatus arranged to perform the method of the first aspect.

In an embodiment, the apparatus comprises a telecommunication network and at least one UE.

Although a few preferred embodiments of the present invention have been shown and described, it will be appreciated by those skilled in the art that various changes and modifications might be made without departing from the scope of the invention, as defined in the appended claims.

### [Advantageous Effects of Invention]

Advantages, and salient features of the invention will become apparent to those skilled in the art from the following detailed description, which, taken in conjunction with the annexed drawings, discloses exemplary embodiments of the invention. For more enhanced communication system, there is a need for method and apparatur for improving a mobility in a telecommunication network.

### [Brief Description of Drawings]

Figure 1 shows a signalling procedure for LTM;
Figure 2 shows UE state machine and state transitions in NR, known in the art;
Figure 3 shows the structure of an LTE system known in the art;
Figure 4 shows a radio protocol structure in an LTE system to which an embodiment may be applied;
Figure 5 shows the structure of a next-generation mobile communication system to which an embodiment may be applied;
Figure 6 shows a radio protocol structure of a next-generation mobile communication system to which an embodiment may be applied;

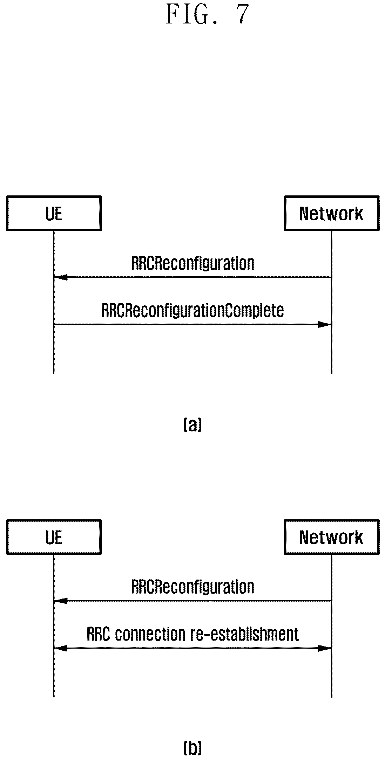

Figure 7 shows successful and unsuccessful RRC reconfigurations;
Figure 8 shows SCell Activation/Deactivation MAC CE of one octet and four octets;
Figure 9 shows Enhanced SCell Activation/Deactivation MAC CE with one octet Ci field and four octet Ci field;
Figure 10 shows an example DL MAC PDU
Figure 11 shows an example UL MAC PDU

### [Mode for the Invention]

These and other aspects of the example embodiments herein will be better appreciated and understood when considered in conjunction with the following description and the accompanying drawings. It should be understood, however, that the following descriptions, while indicating example embodiments and numerous specific details thereof, are given by way of illustration and not of limitation. Many changes and modifications may be made within the scope of the example embodiments herein without departing from the spirit thereof, and the example embodiments herein include all such modifications.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

For the purposes of interpreting this specification, the definitions (as defined herein) will apply and whenever appropriate the terms used in singular will also include the plural and vice versa. It is to be understood that the terminology used herein is for the purposes of describing particular embodiments only and is not intended to be limiting. The terms "comprising", "having" and "including" are to be construed as open-ended terms unless otherwise noted.

The words/phrases "exemplary", "example", "illustration", "in an instance", "and the like", "and so on", "etc.", "etcetera", "e.g.," , "i.e.," are merely used herein to mean "serving as an example, instance, or illustration." Any embodiment or implementation of the present subject matter described herein using the words/phrases "exemplary", "example", "illustration", "in an instance", "and the like", "and so on", "etc.", "etcetera", "e.g.," , "i.e.," is not necessarily to be construed as preferred or advantageous over other embodiments.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

It should be noted that elements in the drawings are illustrated for the purposes of this description and ease of understanding and may not have necessarily been drawn to scale. For example, the flowcharts/sequence diagrams illustrate the method in terms of the steps required for understanding of aspects of the embodiments as disclosed herein. Furthermore, in terms of the construction of the device, one or more components of the device may have been represented in the drawings by conventional symbols, and the drawings may show only those specific details that are pertinent to understanding the present embodiments so as not to obscure the drawings with details that will be readily apparent to those of ordinary skill in the art having the benefit of the description herein. Furthermore, in terms of the system, one or more components/modules which comprise the system may have been represented in the drawings by conventional symbols, and the drawings may show only those specific details that are pertinent to understanding the present embodiments so as not to obscure the drawings with details that will be readily apparent to those of ordinary skill in the art having the benefit of the description herein.

The accompanying drawings are used to help easily understand various technical features and it should be understood that the embodiments presented herein are not limited by the accompanying drawings. As such, the present disclosure should be construed to extend to any modifications, equivalents, and substitutes in addition to those which are particularly set out in the accompanying drawings and the corresponding description. Usage of words such as first, second, third etc., to describe components/elements/steps is for the purposes of this description and should not be construed as sequential ordering/placement/occurrence unless specified otherwise.

L1/L2 Triggered Mobility (LTM) is a procedure in which a base station (gNB) receives L1 measurement reports from User Equipments (UEs), and on their basis, the gNB changes UEs' serving cell(s) by a cell switch command through a Medium Access Control - Control Element (MAC CE), which indicates an LTM candidate cell configuration that the gNB previously prepared and provided to the UE through Radio Resource Control (RRC) signalling. Then cell switch is triggered, by selecting the indicated LTM candidate cell configuration as the target configuration by the gNB. An LTM candidate cell configuration can only be added, modified and released by network via RRC signaling. The LTM procedure can be used to reduce the mobility.

It is an aim of embodiments of the present invention to address issues in the prior art, whether mentioned herein or not.

According to the present invention there is provided an apparatus and method as set forth in the appended claims. Other features of the invention will be apparent from the dependent claims, and the description which follows.

According to a first aspect of the invention, there is provided a method of performing a L1/L2 Triggered Mobility, LTM, cell switch in a telecommunication system, comprising the steps of:
a User Equipment, UE, being configured with an LTM candidate cell configuration by receiving a reconfiguration message, via RRC, from a telecommunication network, the message including the LTM candidate cell configuration;
applying the LTM candidate cell configuration for a target cell indicated in a received MAC Control Element, CE, upon receipt of an LTM triggering MAC CE from the network;
performing LTM cell switch to the target cell upon the reception of LTM triggering MAC CE; and
sending a reconfiguration complete message to the target cell during the LTM switch procedure.

In an embodiment, the message including the LTM candidate cell configuration is sent via Signalling Radio Bearer 1, SRB1;

In an embodiment, the UE sends a Measurement Report to the network before being configured.

In an embodiment, the UE stores the LTM candidate cell configuration before sending the reconfiguration complete message.

In an embodiment, MAC CE from the network includes a candidate configuration index of the target cell.

In an embodiment, if the LTM candidate cell configuration is sent via Signalling Radio Bearer 1, SRB1, then a RRCReconfgurationComplete message is sent to lower layers for transmission using the new configuration.

In an embodiment, the UE is configured with a plurality of candidate cell configurations.

In an embodiment, upon the network initiating the RRC reconfiguration procedure to the UE in RRC_CONNECTED mode, LTM configuration on a Master Cell Group, MCG, is only included when Access Stratum, AS, security has been activated and SRB2, with at least one Data Radio Bearer, DRB, are setup and not suspended.

According to a second aspect of the invention, there is provided apparatus arranged to perform the method of the first aspect.

In an embodiment, the apparatus comprises a telecommunication network and at least one UE.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic drawings.

The following principles apply to LTM:

Each LTM candidate cell configuration can be provided as delta configuration on top of a reference configuration, which is used to form a complete candidate cell configuration. The reference configuration can be managed separately, and a UE stores the reference configuration as a separate configuration. The LTM candidate cell configuration can be configured in RRCReconfiguration message via SRB1 (e.g. Signaling Radio Bearer), i.e. it can be configured after SRB1 establishment.

When a complete candidate cell configuration is applied, it replaces the current UE configuration at the time of cell switch. Although the reconfiguration procedure makes replacement, it doesn't necessarily reset MAC, Radio Link Control (RLC) or Packed Data Convergence Protocol (PDCP) layer.

User plane (UP) is continued without reset to support lossless delivery of user plane data (e.g. intra-Distributed Unit (DU) LTM), if it is configured in RRC signalling, with the target to avoid data loss and the additional delay of data recovery. Specifically, indicators for RLC re-establishment or MAC reset (or Partial MAC reset) or PDCP re-establishment or PDCP data recovery or SDU discard can be included in RRCReconfiguration message as listed below, which can be included with LTM candidate cell configuration together:
- n indicator for MAC reset or Partial MAC reset included in RRCReconfiguration message (e.g. in Cell group (or Cell) configuration)
- an indicator for RLC re-establishment (e.g. reestablishRLC) included in RRCReconfiguration message (e.g. in Cell group (or Cell) configuration)
- an indicator for PDCP re-establishment (e.g. reestablishPDCP) included in RRCReconfiguration message (e.g. in radio bearer configuration, i.e. RadioBearerConfig IE )
- an indicator for PDCP data recovery (e.g. recoverPDCP) included in RRCReconfiguration message (e.g. in radio bearer configuration, i.e. RadioBearerConfig IE )
- an indicator for SDU discard (e.g. discardOnPDCP) for SRBs (e.g. SRB1 or SRB3) included in RRCReconfiguration message (e.g. in radio bearer configuration, i.e. RadioBearerConfig IE ), which can be called PDCP SDU discard.
- The above indicators can be included in RRCReconfiguration message (e.g. in Cell group configuration or LTM candidate cell configuration) including candidate cell configurations for LTM. Upon the reception of the RRCReconfiguration message, UE can store the cell configuration and the indicators and does not apply them to UE configuration. When UE successfully completes it after triggering the LTM procedure (or cell switch) by a cell switch command through a MAC CE indicating the target cell(s) (e.g. identifier(s)), beam index, or, TA (Timing Advance) value, UE can apply the LTM candidate cell configuration and the indicators corresponding to the target cell (or indicated cell in MAC CE). The following conditions are considered as successful completion of the LTM procedure (i.e. cell switch):
- For RACH-based LTM procedure (cell switch), the UE considers that LTM execution procedure is successfully completed when the RACH is successfully completed.
- For RACH-less LTM procedure (cell switch), the UE considers that LTM execution procedure is successfully complete when the UE determines the NW has successfully received its first UL data.

When the above condition for successful completion of LTM cell switch is met (or the LTM cell candidate configuration is complete, i.e. if the LTM cell candidate configuration is indicated to be applied by a indicator), UE can apply the LTM candidate cell configuration and the indicators corresponding to the target cell (or indicated cell in MAC CE) to UE configuration. This approach can avoid UE's early application and reverting it back when it fails, which eases UE implementation. Moreover, the UE cannot know the time when the network sends MAC CE indicating LTM cell switch to UE.

For example, when the above condition is met, UE performs MAC reset (or partial MAC reset) if the indicator is configured in the stored configuration (e.g. LTM candidate cell configuration for LTM) corresponding to the target cell (or indicated cell in MAC CE or successfully switched cell), which can be done by applying the complete LTM cell configuration. When the condition is met, the MAC layer can indicate the successful completion of LTM cell switch to the RRC layer. The RRC layer can indicate MAC reset (or partial MAC reset) to MAC layer, if configured.

For example, when the above condition is met, UE performs RLC re-establishment if the indicator is configured in the stored configuration (e.g. LTM candidate cell configuration for LTM) corresponding to the target cell (or indicated cell in MAC CE or successfully switched cell), which can be done by applying the complete LTM cell configuration. When the condition is met, the MAC layer can indicate the successful completion of LTM cell switch to the RRC layer. The RRC layer can indicate RLC re-establishment to RLC layer, if configured.

For example, when the above condition is met, UE performs PDCP re-establishment if the indicator is configured in the stored configuration (e.g. LTM candidate cell configuration for LTM) corresponding to the target cell (or indicated cell in MAC CE or successfully switched cell), which can be done by applying the complete LTM cell configuration. When the condition is met, the MAC layer can indicate the successful completion of LTM cell switch to the RRC layer. The RRC layer can indicate PDCP re-establishment to PDCP layer, if configured.

For example, when the above condition is met, UE performs PDCP data recovery if the indicator is configured in the stored configuration (e.g. LTM candidate cell configuration for LTM) corresponding to the target cell (or indicated cell in MAC CE or successfully switched cell), which can be done by applying the complete LTM cell configuration. PDCP data recovery can be configured only for a PDCP entity associated with AM RLC entities (RLC entity with AM(Acknowledged Mode) mode). When the condition is met, the MAC layer can indicate the successful completion of LTM cell switch to the RRC layer. The RRC layer can indicate PDCP data recovery to PDCP layer, if configured.

For example, when the above condition is met, UE performs SDU discard in PDCP entity (i.e. PDCP SDU discard) if the indicator is configured in the stored configuration (e.g. LTM candidate cell configuration for LTM) corresponding to the target cell (or indicated cell in MAC CE or successfully switched cell), which can be done by applying the complete LTM cell configuration. SDU discard can be configured only for a PDCP entity of SRBs associated with AM RLC entities (RLC entity with AM(Acknowledged Mode) mode). When the condition is met, the MAC layer can indicate the successful completion of LTM cell switch to the RRC layer. The RRC layer can indicate SDU discard to PDCP layer, if configured. For SRBs, when upper layers (e.g. RRC layer) request a PDCP SDU discard, the PDCP entity shall discard all stored PDCP SDUs and PDCP PDUs. It is beneficial to discard old RRC messages of SRBs to prevent unnecessary (re-)transmission to the target cell. The PDCP SDU discard for SRBs (e.g. SRB1 or SRB3) can be triggered and performed when the LTM cell switch procedure fails (e.g. the supervisor timer for LTM cell switch is expired), in order to avoid unnecessary (re-)transmission of RRC message (e.g. RRC Reconfiguration Complete message for the target cell UE failed to LTM cell switch to). The RLC re-establishment for SRBs (e.g. SRB1 or SRB3) can be triggered and performed when the LTM cell switch procedure fails (e.g. the supervisor timer for LTM cell switch is expired), in order to avoid unnecessary (re-)transmission of RRC message (e.g. RRC Reconfiguration Complete message for the target cell UE failed to LTM cell switch to)

In another embodiment, upon the reception of MAC CE indicating LTM cell switch (or LTM cell switch execution), UE can apply the LTM candidate cell configuration and the indicators corresponding to the target cell (or indicated cell in MAC CE) to UE configuration. This approach can avoid UE's early application and revert it back when it fails, which eases UE implementation. This approach can avoid UE's early application. As the UE cannot know the time when the network sends MAC CE indicating LTM cell switch, UE can follow this approach to apply the configuration timely. The reception of MAC CE indicating LTM cell switch can implies LTM cell switch execution.

For example, upon the reception of MAC CE indicating LTM cell switch (or LTM cell switch execution), UE performs MAC reset (or partial MAC reset) if the indicator is configured in the stored configuration (e.g. LTM candidate cell configuration for LTM) corresponding to the target cell (or indicated cell in MAC CE or successfully switched cell), which can be done by applying the complete LTM cell configuration. Upon the reception of MAC CE indicating LTM cell switch (or LTM cell switch execution), the MAC layer can indicate the successful completion of LTM cell switch to the RRC layer. The RRC layer can indicate MAC reset (or partial MAC reset) to MAC layer, if configured.

For example, upon the reception of MAC CE indicating LTM cell switch (or LTM cell switch execution), UE performs RLC re-establishment if the indicator is configured in the stored configuration (e.g. LTM candidate cell configuration for LTM) corresponding to the target cell (or indicated cell in MAC CE or successfully switched cell), which can be done by applying the complete LTM cell configuration. Upon the reception of MAC CE indicating LTM cell switch (or LTM cell switch execution), the MAC layer can indicate the successful completion of LTM cell switch to the RRC layer. The RRC layer can indicate RLC re-establishment to RLC layer, if configured.

For example, upon the reception of MAC CE indicating LTM cell switch (or LTM cell switch execution), UE performs PDCP re-establishment if the indicator is configured in the stored configuration (e.g. LTM candidate cell configuration for LTM) corresponding to the target cell (or indicated cell in MAC CE or successfully switched cell), which can be done by applying the complete LTM cell configuration. Upon the reception of MAC CE indicating LTM cell switch (or LTM cell switch execution), the MAC layer can indicate the successful completion of LTM cell switch to the RRC layer. The RRC layer can indicate PDCP re-establishment to PDCP layer, if configured.

For example, upon the reception of MAC CE indicating LTM cell switch (or LTM cell switch execution), UE performs PDCP data recovery if the indicator is configured in the stored configuration (e.g. LTM candidate cell configuration for LTM) corresponding to the target cell (or indicated cell in MAC CE or successfully switched cell), which can be done by applying the complete LTM cell configuration. PDCP data recovery can be configured only for a PDCP entity associated with AM RLC entities (RLC entity with AM(Acknowledged Mode) mode). Upon the reception of MAC CE indicating LTM cell switch (or LTM cell switch execution), the MAC layer can indicate the successful completion of LTM cell switch to the RRC layer. The RRC layer can indicate PDCP data recovery to PDCP layer, if configured.

For example, upon the reception of MAC CE indicating LTM cell switch (or LTM cell switch execution), UE performs SDU discard in PDCP entity (i.e. PDCP SDU discard) if the indicator is configured in the stored configuration (e.g. LTM candidate cell configuration for LTM) corresponding to the target cell (or indicated cell in MAC CE or successfully switched cell), which can be done by applying the complete LTM cell configuration. SDU discard can be configured only for a PDCP entity of SRBs associated with AM RLC entities (RLC entity with AM(Acknowledged Mode) mode). Upon the reception of MAC CE indicating LTM cell switch (or LTM cell switch execution), the MAC layer can indicate the successful completion of LTM cell switch to the RRC layer. The RRC layer can indicate SDU discard to PDCP layer, if configured. For SRBs, when upper layers (e.g. RRC layer) request a PDCP SDU discard, the PDCP entity shall discard all stored PDCP SDUs and PDCP PDUs. It is beneficial to discard old RRC messages of SRBs to prevent unnecessary (re-)transmission to the target cell. The PDCP SDU discard for SRBs (e.g. SRB1 or SRB3) can be triggered and performed when the LTM cell switch procedure fails (e.g. the supervisor timer for LTM cell switch is expired), in order to avoid unnecessary (re-)transmission of RRC message (e.g. RRC Reconfiguration Complete message for the target cell UE failed to LTM cell switch to). The RLC re-establishment for SRBs (e.g. SRB1 or SRB3) can be triggered and performed when the LTM cell switch procedure fails (e.g. the supervisor timer for LTM cell switch is expired), in order to avoid unnecessary (re-)transmission of RRC message (e.g. RRC Reconfiguration Complete message for the target cell UE failed to LTM cell switch to)

In another embodiment, upon the reception of MAC CE indicating LTM cell switch (or LTM cell switch execution) or upon the reception of RRCReconfiguration message including the indicators(or the LTM cell candidate configuration is complete, i.e. if the LTM cell candidate configuration is indicated to be applied by a indicator), UE can apply the LTM candidate cell configuration (e.g. complete LTM cell configuration) and the indicators corresponding to the target cell (or indicated cell in MAC CE) to UE configuration. This approach can be efficiently performed by the network. For example, the network sends MAC CE indicating LTM cell switch and RRCReconfiguration message including indicators together (e.g. at a time or in the same MAC PDU) to make UE perform the following actions.

For example, upon the reception of MAC CE indicating LTM cell switch (or LTM cell switch execution) or upon the reception of RRCReconfiguration message including the indicators, UE performs MAC reset (or partial MAC reset) if the indicator is configured in the stored configuration (e.g. LTM candidate cell configuration for LTM) corresponding to the target cell (or indicated cell in MAC CE or successfully switched cell), which can be done by applying the complete LTM cell configuration. Upon the reception of MAC CE indicating LTM cell switch (or LTM cell switch execution), the MAC layer can indicate the successful completion of LTM cell switch to the RRC layer. The RRC layer can indicate MAC reset (or partial MAC reset) to MAC layer, if configured.

For example, upon the reception of RRCReconfiguration message including the indicators, UE performs RLC re-establishment if the indicator is configured in the stored configuration (e.g. LTM candidate cell configuration for LTM) corresponding to the target cell (or indicated cell in MAC CE or successfully switched cell), which can be done by applying the complete LTM cell configuration. Upon the reception of RRCReconfiguration message including the indicators, the MAC layer can indicate the successful completion of LTM cell switch to the RRC layer. The RRC layer can indicate RLC re-establishment to RLC layer, if configured.

For example, upon the reception of RRCReconfiguration message including the indicators, UE performs PDCP re-establishment if the indicator is configured in the stored configuration (e.g. LTM candidate cell configuration for LTM) corresponding to the target cell (or indicated cell in MAC CE or successfully switched cell), which can be done by applying the complete LTM cell configuration. Upon the reception of RRCReconfiguration message including the indicators, the MAC layer can indicate the successful completion of LTM cell switch to the RRC layer. The RRC layer can indicate PDCP re-establishment to PDCP layer, if configured.

For example, upon the reception of RRCReconfiguration message including the indicators, UE performs PDCP data recovery if the indicator is configured in the stored configuration (e.g. LTM candidate cell configuration for LTM) corresponding to the target cell (or indicated cell in MAC CE or successfully switched cell), which can be done by applying the complete LTM cell configuration. PDCP data recovery can be configured only for a PDCP entity associated with AM RLC entities (RLC entity with AM(Acknowledged Mode) mode). Upon the reception of RRCReconfiguration message including the indicators, the MAC layer can indicate the successful completion of LTM cell switch to the RRC layer. The RRC layer can indicate PDCP data recovery to PDCP layer, if configured.

For example, upon the reception of RRCReconfiguration message including the indicators UE performs SDU discard in PDCP entity (i.e. PDCP SDU discard) if the indicator is configured in the stored configuration (e.g. LTM candidate cell configuration for LTM) corresponding to the target cell (or indicated cell in MAC CE or successfully switched cell), which can be done by applying the complete LTM cell configuration. SDU discard can be configured only for a PDCP entity of SRBs associated with AM RLC entities (RLC entity with AM(Acknowledged Mode) mode). Upon the reception of RRCReconfiguration message including the indicators, the MAC layer can indicate the successful completion of LTM cell switch to the RRC layer. The RRC layer can indicate SDU discard to PDCP layer, if configured. For SRBs, when upper layers (e.g. RRC layer) request a PDCP SDU discard, the PDCP entity shall discard all stored PDCP SDUs and PDCP PDUs. It is beneficial to discard old RRC messages of SRBs to prevent unnecessary (re-)transmission to the target cell. The PDCP SDU discard for SRBs (e.g. SRB1 or SRB3) can be triggered and performed when the LTM cell switch procedure fails (e.g. the supervisor timer for LTM cell switch is expired), in order to avoid unnecessary (re-)transmission of RRC message (e.g. RRC Reconfiguration Complete message for the target cell UE failed to LTM cell switch to). The RLC re-establishment for SRBs (e.g. SRB1 or SRB3) can be triggered and performed when the LTM cell switch procedure fails (e.g. the supervisor timer for LTM cell switch is expired), in order to avoid unnecessary (re-)transmission of RRC message (e.g. RRC Reconfiguration Complete message for the target cell UE failed to LTM cell switch to)

Note that this delayed application of configuration is totally different from the legacy behaviour because UE performs MAC reset/RLC/PDCP re-establishment, if configured, upon the reception of RRCReconfiguration in legacy procedure. In the above, the stored LTM candidate cell configuration can be regarded as reference configuration, which can be applied at a specific time as proposed.

Security is not updated in LTM. In another embodiment, the network decides whether to update the security based on the type of mobility (e.g. to which cell UE is indicated to perform cell switch). For example, the security configuration for security update is not included in the LTM candidate cell configuration (RRCReconfiguration) for the case that this candidate cell belongs to intra-gNB-DU or intra-gNB-CU. However, the security configuration for security update is included in the LTM candidate cell configuraton (RRCReconfiguration) for the case that this candidate cell belongs to inter-gNB-DU (i.e. inter-gNB-DU mobility case) When the condition for successful completion of LTM cell switch is met after triggering the LTM procedure (or cell switch) by a cell switch command through a MAC CE, UE applies and updates the security configuration to the current configuration, if configured,

Subsequent LTM between LTM candidate cell configurations (i.e., UE does not release other LTM candidate cell configurations after LTM is triggered) can be performed without RRC reconfiguration.

LTM supports both intra-gNB-DU and intra-gNB-CU inter-gNB-DU mobility. LTM also supports inter-frequency mobility, including mobility to inter-frequency cell that is not a current serving cell. The following scenarios are supported:
- Cell change in non-CA scenario,
- PCell change without SCell change in CA scenario,
- PCell change with SCell change(s) in CA scenario, including the following cases:
   a) The target PCell/target SCell(s) is not a current serving cell (CAto-CA scenario with PCell change)
   b) The target PCell is a current SCell
   c) The target SCell is the current PCell.
- Dual connectivity scenario, at least for the PSCell change without MN involvement case, i.e. intra-SN. When UE is configured with dual connectivity (i.e. SCG(Secondary Cell Group) and MCG(Master Cell Group)), For SCG (or LTM procedure for SCG), the LTM candidate cell configuration of SCG can be configured in RRCReconfiguration message via SRB3, i.e. it can be configured after SRB3 establishment. For SCG (or LTM procedure for SCG), the LTM candidate cell configuration of SCG cannot be configured via SRB1. For MCG (or LTM procedure for MCG), the LTM candidate cell configuration of MCG can be configured in RRCReconfiguration message via SRB1, i.e. it can be configured after SRB1 establishment.

Certain procedures are provided according to embodiments of the present invention. A first relates to C-plane handling (Control plane handling). Cell switch trigger is conveyed in a MAC CE, which contains at least a candidate configuration index together with beam indication.

UE may perform Contention Based Random Access (CBRA) or Contention Free Random Access (CFRA) at cell switch. UE may also skip random access procedure if UE doesn't need to acquire Timing Advice (TA) for the target cell during cell switch.

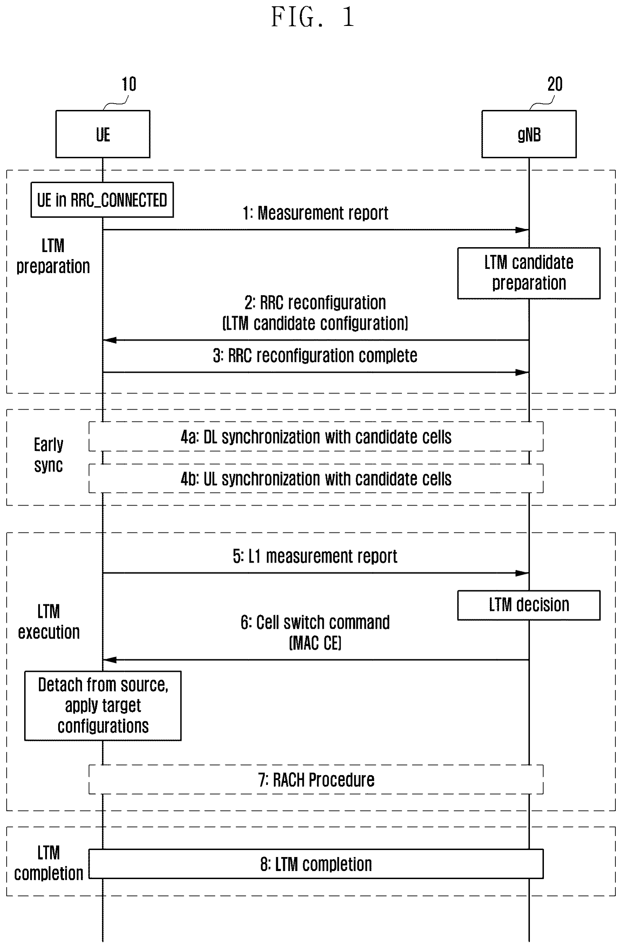

The overall procedure for LTM is shown in Figure 1. Subsequent LTM is done by repeating the early synchronization, LTM execution, and LTM completion steps without releasing other LTM candidate cell configurations after each LTM completion. Figure 1 illustrates certain messages exchanged between UE 10 and gNB 20.

The steps are as follows:
1. The UE sends a MeasurementReport message to the gNB. The gNB decides to use LTM and initiates candidate cell(s) preparation.
2. The gNB transmits an RRCReconfiguration message to the UE including the LTM candidate cell configurations of one or multiple candidate cells.
3. The UE stores the LTM candidate cell configurations and transmits a RRCReconfigurationComplete message to the gNB.
4a/4b. The UE may perform DL synchronization and TA acquisition with candidate cell(s) before receiving the cell switch command.

Note that DL synchronization for candidate cell(s) before cell switch command is supported, at least based on SSB. FFS necessary mechanism. Note also that TA acquisition of candidate cell(s) before LTM cell switch command is supported, at least based on Physical Downlink Control Channel (PDCCH) ordered Random Access Channel (RACH), where the PDCCH order is only triggered by source cell. FFS detailed mechanism.

5. The UE performs L1 measurements on the configured candidate cell(s), and transmits lower-layer measurement reports to the gNB.

Note it is not yet decided whether the lower-layer measurement reports are carried on L1 or MAC. Also note that the order of DL/UL sync (step 4a/4b) and L1 measurement (step 5) is not defined and subject to change.

6. The gNB decides to execute cell switch to a target cell and transmits a MAC CE triggering cell switch by including the candidate configuration index of the target cell. The UE switches to the configuration of the target cell.

7. The UE performs random access procedure towards the target cell, if cell switch needs to include performing random access procedure.

8. The UE indicates successful completion of the cell switch towards the target cell.

The UE can perform the steps 4-8 multiple times for subsequent LTM cell switch based on the configuration provided in step 2.

A second embodiment relates to U-plane handling (User plane handling). In LTM, whether the UE performs partial or full MAC reset, reestablishes RLC, performs data recovery with PDCP during cell switch is explicitly controlled by the network through RRC signalling. MAC/RLC re-establishment /PDCP data recovery/PDCP re-establishment (when configured). RF retuning (e.g. needed for inter-frequency), baseband retuning.

Security protection is also considered in embodiments of the invention. The following high-level principles are applied. In embodiments of this invention, the security protection implies ciphering or integrity protection. The ciphering means not only the ciphering operation but also the deciphering operation because the deciphering should be applied to the data at the receiver if a data is ciphered at the transmitter. Likewise, the integrity protection means the integrity verification operation as well as the integrity protection operation because the integrity verification should be applied to the data at the receiver if a data is integrity protected at the transmitter.

Access Stratum (AS) security comprises of the integrity protection and ciphering of RRC signalling (SRBs) and user data (DRBs).

RRC handles the configuration of the AS security parameters which are part of the AS configuration: the integrity protection algorithm, the ciphering algorithm, if integrity protection and/or ciphering is enabled for a DRB and two parameters, namely the keySetChangeIndicator and the nextHopChainingCount, which are used by the UE to determine the AS security keys upon reconfiguration with sync (with key change), connection re-establishment and/or connection resume.

The integrity protection algorithm is common for Signalling Radio Bearers SRB1, SRB2, SRB3 (if configured), SRB4 (if configured), SRBx (if configured) and Data Radio Bearers (DRBs) configured with integrity protection, with the same keyToUse value. The ciphering algorithm is common for SRB1, SRB2, SRB3 (if configured), SRB4 (if configured), SRBx (if configured) and DRBs configured with the same keyToUse value. Neither integrity protection nor ciphering applies for SRB0.

Note that all DRBs related to the same PDU session have the same enable/disable setting for ciphering and the same enable/disable setting for integrity protection.

RRC integrity protection and ciphering are always activated together, i.e. in one message/procedure. RRC integrity protection and ciphering for SRBs are never de-activated. However, it is possible to switch to a 'NULL' ciphering algorithm (nea0).

For SRBx (if configured), RRC integrity protection and ciphering can be activated and deactivated based on configuration or indication by RRC messages (or MAC CE(Control Element) or PDCP control PDU(Protocol Data Unit)), in order to reduce the UE processing burden. For SRBx (if configured), it is also possible to switch to a 'NULL' ciphering algorithm (nea0) and the 'NULL' integrity protection algorithm (nia0) can be used.

The 'NULL' integrity protection algorithm (nia0) is used only for SRBs and for the UE in limited service mode and when used for SRBs, integrity protection is disabled for DRBs. In case the 'NULL' integrity protection algorithm is used, 'NULL' ciphering algorithm is also used.

Note that lower layers discard RRC messages for which the integrity protection check has failed and indicate the integrity protection verification check failure to RRC.

The AS applies four different security keys: one for the integrity protection of RRC signalling (KRRCint), one for the ciphering of RRC signalling (KRRCenc), one for integrity protection of user data (KUPint) and one for the ciphering of user data (KUPenc). All four AS keys are derived from the KgNB key. The KgNB key is based on the KAMF key, which is handled by upper layers.

The integrity protection and ciphering algorithms can only be changed with reconfiguration with sync. The AS keys (KgNB, KRRCint, KRRCenc, KUPint and KUPenc) change upon reconfiguration with sync (if masterKeyUpdate is included), and upon connection re-establishment and connection resume.

For each radio bearer an independent counter (COUNT used in PDCP layer) is maintained for each direction. For each radio bearer, the COUNT is used as input for ciphering and integrity protection.

It is not allowed to use the same COUNT value more than once for a given security key. The network is responsible for avoiding reuse of the COUNT with the same RB identity and with the same key, e.g. due to the transfer of large volumes of data, release and establishment of new RBs, and multiple termination point changes for RLC-UM bearers and multiple termination point changes for RLC-AM bearer with SN terminated PDCP re-establishment (COUNT reset) due to SN only full configuration whilst the key stream inputs (i.e. bearer ID, security key) at MN have not been updated. In order to avoid such re-use, the network may e.g. use different RB identities for RB establishments, change the AS security key, or an RRC_CONNECTED to RRC IDLE/RRC_INACTIVE and then to RRC_CONNECTED transition.

In order to limit the signalling overhead, individual messages/ packets include a short sequence number (PDCP SN(Sequence Number)). In addition, an overflow counter mechanism is used: the hyper frame number (HFN used in PDCP layer). The HFN needs to be synchronized between the UE and the network.

For each SRB, the value provided by RRC to lower layers to derive the 5-bit BEARER parameter used as input for ciphering and for integrity protection is the value of the corresponding srb-Identity with the MSBs padded with zeroes.

For a UE provided with an sk-counter, keyToUse indicates whether the UE uses the master key (KgNB) or the secondary key (S-KeNB or S-KgNB) for a particular DRB. The secondary key is derived from the master key and sk-Counter. Whenever there is a need to refresh the secondary key, e.g. upon change of MN with KgNB change or to avoid COUNT reuse, the security key update is used. When the UE is in NR-DC, the network may provide a UE configured with an SCG with an sk-Counter even when no DRB is setup using the secondary key (S-KgNB) in order to allow the configuration of SRB3. The network can also provide the UE with an sk-Counter, even if no SCG is configured, when using SN terminated MCG bearers.

Embodiments of the invention make use of the RRC Protocol and concern UE states and state transitions.

A UE is either in RRC_CONNECTED state or in RRC_INACTIVE state when an RRC connection has been established. If this is not the case, i.e. no RRC connection is established, the UE is in RRC_IDLE state. The RRC states can further be characterised as follows:
RRC_IDLE state:
   - A UE specific DRX may be configured by upper layers;
   - At lower layers, the UE may be configured with a DRX for PTM transmission of MBS broadcast;
   - UE controlled mobility based on network configuration;
   - The UE:
      - Monitors Short Messages transmitted with P-RNTI over DCI (see clause 6.5);
      - Monitors a Paging channel for CN paging using 5G-S-TMSI, except if the UE is acting as a L2 U2N Remote UE;
      - If configured by upper layers for MBS multicast reception, monitors a Paging channel for CN paging using TMGI;
      - Performs neighbouring cell measurements and cell (re-)selection;
      - Acquires system information and can send SI request (if configured);
      - Performs logging of available measurements together with location and time for logged measurement configured UEs;
      - Performs idle/inactive measurements for idle/inactive measurement configured UEs;
      - Performs AI/ML functionality (e.g. collection of AI/ML data or measurements for AI/ML data or reporting AI/ML data) configured UEs;
      - If configured by upper layers for MBS broadcast reception, acquires MCCH change notification and MBS broadcast control information and data.
RRC_INACTIVE state:
   - A UE specific DRX may be configured by upper layers or by RRC layer;
   - At lower layers, the UE may be configured with a DRX for PTM transmission of MBS broadcast;
   - UE controlled mobility based on network configuration;
   - The UE stores the UE Inactive AS context;
   - A RAN-based notification area is configured by RRC layer;
   - Transfer of unicast data and/or signalling to/from UE over radio bearers configured for SDT.
The UE:
   - Monitors Short Messages transmitted with P-RNTI over DCI (see clause 6.5);
   - During SDT procedure, monitors control channels associated with the shared data channel to determine if data is scheduled for it;
   - While SDT procedure is not ongoing, monitors a Paging channel for CN paging using 5G-S-TMSI and RAN paging using fullI-RNTI, except if the UE is acting as a L2 U2N Remote UE;
   - If configured by upper layers for MBS multicast reception, while SDT procedure is not ongoing, monitors a Paging channel for paging using TMGI;
   - Performs neighbouring cell measurements and cell (re-)selection;
   - Performs RAN-based notification area updates periodically and when moving outside the configured RAN-based notification area;
   - Acquires system information, while SDT procedure is not ongoing, and can send SI request (if configured);
   - While SDT procedure is not ongoing, performs logging of available measurements together with location and time for logged measurement configured UEs;
   - While SDT procedure is not ongoing, performs idle/inactive measurements for idle/inactive measurement configured UEs;
   - While SDT procedure is not ongoing, performs AI/ML functionality (e.g. collection of AI/ML data or measurements for AI/ML data or reporting AI/ML data) configured UEs;
   - If configured by upper layers for MBS broadcast reception, acquires MCCH change notification and MBS broadcast control information and data;
   - Transmits SRS for Positioning.
RRC_CONNECTED state:
   - The UE stores the AS context;
   - Transfer of unicast data to/from UE;
   - Transfer of MBS multicast data to UE;
   - At lower layers, the UE may be configured with a UE specific DRX;
   - At lower layers, the UE may be configured with a DRX for PTM transmission of MBS broadcast and/or a DRX for MBS multicast;
   - For UEs supporting CA, use of one or more SCells, aggregated with the SpCell, for increased bandwidth;
   - For UEs supporting DC, use of one SCG, aggregated with the MCG, for increased bandwidth;
   - Network controlled mobility within NR, to/from E-UTRA, and to UTRA-FDD;
   - Network controlled mobility (path switch) between a serving cell and a L2 U2N Relay UE, or vice versa.
The UE:
   - Monitors Short Messages transmitted with P-RNTI over DCI (see clause 6.5), if configured;
   - Monitors control channels associated with the shared data channel to determine if data is scheduled for it;
   - Provides channel quality and feedback information;
   - Performs neighbouring cell measurements and measurement reporting;
   - Performs AI/ML functionality (e.g. collection of AI/ML data or measurements for AI/ML data or reporting AI/ML data) configured UEs;
   - Acquires system information;
   - Performs immediate MDT measurement together with available location reporting;
   - If configured by upper layers for MBS broadcast reception, acquires MCCH change notification and MBS broadcast control information and data.

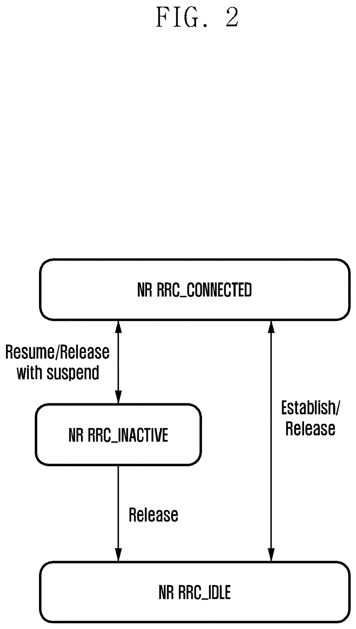

Figure 2 illustrates an overview of UE RRC state machine and state transitions in NR. A UE has only one RRC state in NR at one time.

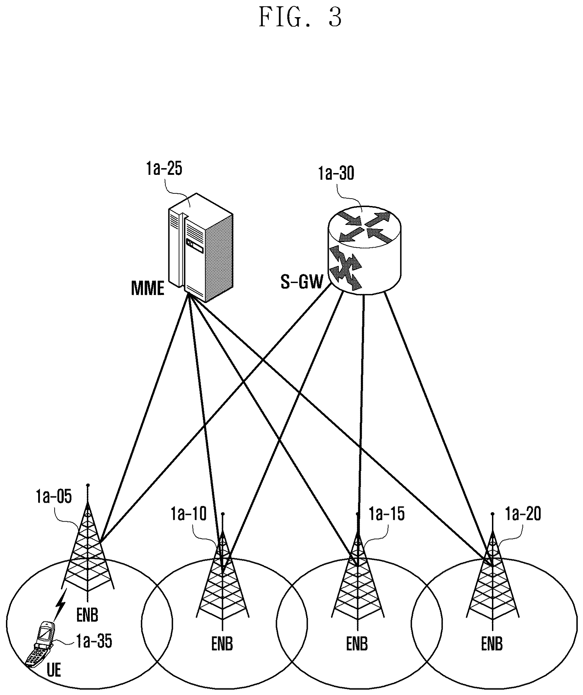

FIG. 3 illustrates the structure of a Long Term Evolution (LTE) system to which an embodiment of the invention can be applied.

Referring to FIG. 3, a radio access network of an LTE system includes next-generation base stations (also referred to as evolved node Bs, hereinafter eNBs, node Bs, or base stations) 1a-05, 1a-10, 1a-15, and 1a-20, a mobility management entity (MME) 1a-25, and a serving gateway (S-GW) 1a-30. A user equipment (hereinafter UE or terminal) 1a-35 accesses an external network through the eNBs 1a-05 to 1a-20 and S-GW 1a-30.

In FIG. 3, the eNBs 1a-05 to 1a-20 correspond to an existing node B of an UMTS system. The eNBs are connected to the UE 1a-35 through a radio channel, and perform a more complicated role than the existing node B. In the LTE system, since all user traffic pertaining to real-time service, such as voice over IP (VoIP), via the Internet protocol, is serviced through a shared channel, a device that performs scheduling by collecting state information, such as buffer states, available transmit power states, and channel states of UEs, is required, and eNBs 1a-05 to 1a-20 are in charge of this function of the device. In general, one eNB controls multiple cells. For example, in order to implement a transmission rate of 100 Mbps, the LTE system uses orthogonal frequency division multiplexing (OFDM) as a radio access technology in the bandwidth of 20 MHz. In addition, the LTE system adopts an adaptive modulation & coding (hereinafter referred to as AMC) scheme for determining a modulation scheme and a channel coding rate based on the channel state of the UE. The S-GW 1a-30 is a device for providing a data bearer and generating or removing a data bearer under the control of the MME 1a-25. The MME is in charge of various control functions in addition to a mobility management function for the UE, and is connected to multiple base stations.

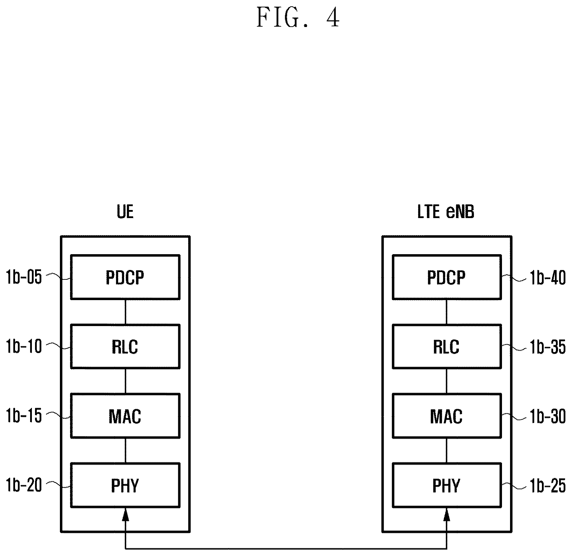

FIG. 4 illustrates a radio protocol structure in an LTE system to which an embodiment of the invention can be applied.

Referring to FIG. 4, the radio protocol of the LTE system includes packet data convergence protocols (PDCPs) 1b-05 and 1b-40, radio link controls (RLCs) 1b-10 and 1b-35, and medium access controls (MACs) 1b-15 and 1b-30, in a UE and an eNB, respectively. The packet data convergence protocols (PDCPs) 1b-05 and 1b-40 are used to perform operations, such as IP header compression/restoration. The main functions of PDCPs are summarized as follows:
- Header compression and decompression: ROHC only
- Transfer of user data
- In-sequence delivery of upper layer PDUs at PDCP re-establishment procedure for RLC acknowledged mode (AM)
- Sequence reordering (for split bearers in DC (only support for RLC AM): PDCP PDU routing for transmission and PDCP PDU reordering for reception)
- Duplicate detection of lower layer service data units (SDUs) in a PDCP re-establishment procedure for RLC AM
- Retransmission of PDCP SDUs at handover and, for split bearers in DC, of PDCP PDUs at PDCP data-recovery procedure, for RLC AM)
- Ciphering and deciphering
- Timer-based SDU discard in uplink

The radio link control (hereinafter referred to as RLC) 1b-10 and 1b-35 performs ARQ operation by reconfiguring a PDCP protocol data unit (PDU) or RLC service data unit (SDU) to an appropriate size. The main functions of RLC are summarized below:
- Transfer of upper layer PDUs
- ARQ function (Error correction through ARQ (only for AM data transfer))
- Concatenation, segmentation and reassembly of RLC SDUs (only for unacknowledged mode (UM) and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MACs 1b-15 and 1b-30 are connected to multiple RLC layer devices configured in one UE, and may perform an operation of multiplexing RLC PDUs to MAC PDUs and demultiplexing RLC PDUs from MAC PDUs. The main functions of MACs are summarized as follows:
- Mapping between logical channels and transport channels
- Multiplexing/de-multiplexing of MAC SDUs belonging to one or different logical channels into/from transport blocks (TB) transferred to/from the physical layer on transport channels
- Scheduling information reporting
- Error correction through hybrid automatic repeat request (HARQ)
- Priority handling between logical channels of one UE
- Priority handling between UEs by means of dynamic scheduling
- MBMS service identification
- Transport format selection
- Padding

Physical layers 1b-20 and 1b-25 may perform operations of channel coding and modulating upper layer data, forming the upper layer data into an OFDM symbol, transmitting the OFDM symbol through a radio channel, or of demodulating an OFDM symbol received through a radio channel, channel-decoding the OFDM symbol, and transmitting the OFDM symbol to an upper layer.

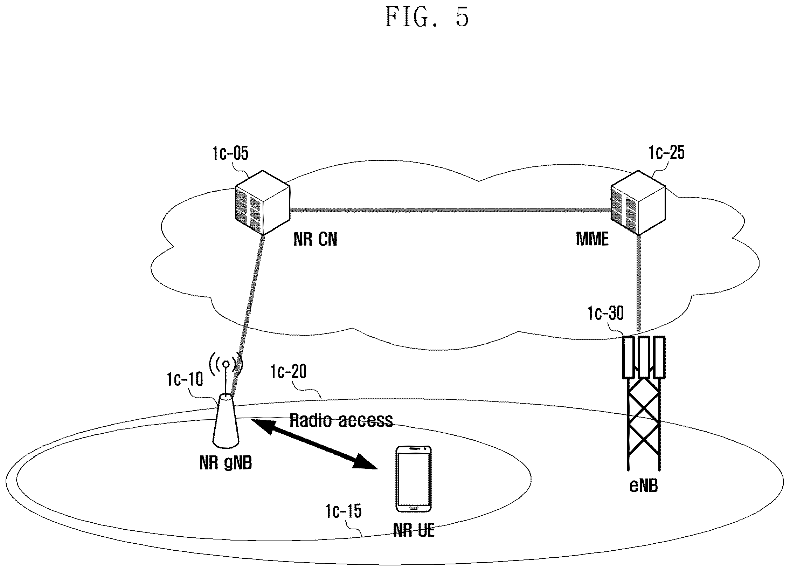

FIG. 5 illustrates the structure of a next-generation mobile communication system to which an embodiment of the invention can be applied.

Referring to FIG. 5, a radio access network of a next-generation mobile communication system (hereinafter referred to as NR or 5G) includes a new radio node B (hereinafter referred to as an NR gNB, or NR base station) 1c-10 and a new radio core network (NR CN) 1c-05. A user terminal (a new radio user equipment, hereinafter referred to as NR UE or a UE) 1c-15 accesses an external network via an NR gNB 1c-10 and an NR CN 1c-05.

In FIG. 5, the NR gNB 1c-10 corresponds to an evolved node B (eNB) of the existing LTE system. The NR gNB is connected to the NR UE 1c-15 via a radio channel, and may provide an excellent service as compared to the existing node B. In the next-generation mobile communication system, since all types of user traffics are serviced through a shared channel, there is a need for a device for performing scheduling by collecting state information, such as buffer states, available transmission power states, and channel states of UEs. Further, the NR NB 1c-10 is in charge of this function of the device. In general, one NR gNB typically controls multiple cells. In order to implement ultra-high speed data transmission as compared to the existing LTE, the NR gNB may have the existing maximum bandwidth or more, and may additionally employ beamforming technology using orthogonal frequency division multiplexing (hereinafter referred to as OFDM) as a radio access technology. In addition, the NR gNB adopts an adaptive modulation & coding (AMC) scheme that determines a modulation scheme and a channel coding rate based on the channel state of a UE. The NR CN 1c-05 performs functions, such as mobility support, bearer configuration, QoS configuration, and the like. The NR CN is a device that is in charge of various control functions in addition to a mobility management function for a UE, and is connected to multiple base stations. In addition, the next-generation mobile communication system may also operate in conjunction with the existing LTE system, and the NR CN may be connected to an MME 1c-25 via a network interface. The MME is connected to an eNB 1c-30, that is, to the existing base station.

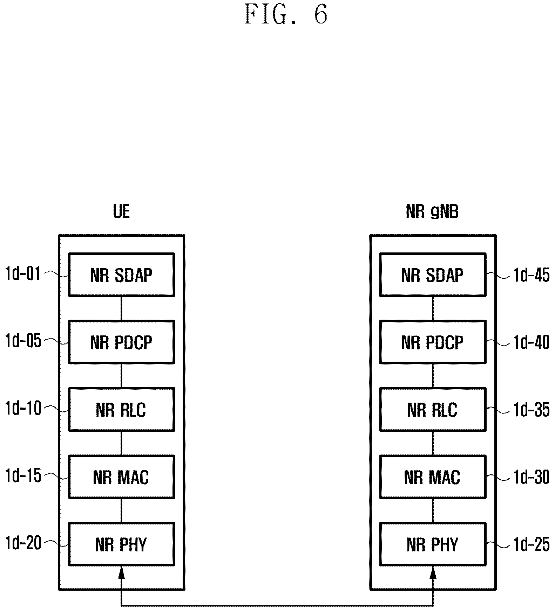

FIG. 6 illustrates a radio protocol structure of a next-generation mobile communication system to which an embodiment of the invention can be applied.

Referring to FIG. 6, the radio protocol of the next-generation mobile communication system includes NR SDAPs 1d-01 and 1d-45, NR PDCPs 1d-05 and 1d-40, NR RLCs 1d-10 and 1d-35, and NR MACs 1d-15 and 1d-30, respectively, in a UE and an NR base station.

The main functions of the NR SDAPs 1d-01 and 1d-45 may include some of the following functions:
- Transfer of user plane data
- Mapping between a QoS flow and a data bearer (DRB) for both downlink (DL) and uplink (UL)
- Marking QoS flow ID in both DL and UL packets
- Mapping reflective QoS flow to DRB for the UL SDAP PDUs

For the SDAP layer device, the UE may be configured as to whether or not use the header of the SDAP layer device (or new layer device) or the function of the SDAP layer device (or new layer device) for each PDCP layer device, for each bearer, and for each logical channel through an RRC message. When the SDAP header is configured, an NAS reflective QoS reflective configuration 1-bit indicator (NAS reflective QoS) and an AS QoS reflective configuration 1-bit indicator (AS reflective QoS) of the SDAP header are used to instruct the UE to enable updating or reconfiguration of the mapping information relating to the QoS flow of uplink and downlink and data bearer. The SDAP header may include QoS flow ID information indicating QoS. The QoS information may be used as data processing priority, scheduling information, etc., in order to support a smooth service.

The main functions of the NR PDCPs 1d-05 and 1d-40 may include some of the following functions:
- Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering function of the NR PDCP device refers to a function of sequentially reordering PDCP PDUs, received from a lower layer, based on a PDCP sequence number (SN), and may include a function of transmitting data to an upper layer in the reordered sequence, a function of directly transmitting data to an upper layer without taking the sequence into consideration, a function of reordering the sequence and recording missing PDCP PDUs, a function of providing a state report on the missing PDCP PDUs to a transmission side, and a function of requesting retransmission of the missing PDCP PDUs.

The main functions of the NR RLCs 1d-10 and 1d-35 may include some of the following functions:
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery function of the NR RLC device refers to a function of transmitting RLC SDUs, received from a lower layer, to an upper layer in a sequence of reception, and may include, if one RLC SDU is originally segmented into multiple RLC SDUs and received, a function of reassembling and transmitting the multiple RLC SDUs. The in-sequence delivery function may include a function of reordering the received RLC PDUs based on an RLC SN or PDCP SN, reordering the sequence and recording missing RLC PDUs, providing a state report on the missing RLC PDUs to a transmission side, and requesting retransmission of the missing RLC PDUs. Alternatively, the in-sequence delivery function of the NR RLC device may include a function of sequentially transmitting only RLC SDUs prior to the missing RLC SDU to an upper layer if an RLC SDU is missing, or sequentially transmitting all the RLC SDUs received before a timer starts to an upper layer if the timer expires even if there is a missing RLC SDU, or sequentially transmitting all RLC SDUs received so far to an upper layer if a predetermined timer expires even if there is a missing RLC SDU. In addition, the RLC PDUs may be processed in the sequence in which the RLC PDUS are received (in a sequence of arrival regardless of the serial number or sequence number), and may be transmitted to a PDCP device in out-of-sequence delivery. The in-sequence delivery function may include a function of receiving segments stored in a buffer or segments to be received later, reconfiguring the segments in one complete RLC PDU, processing the RLC PDU, and transmitting the RLC PDU to the PDCP device. The NR RLC layer may not include a concatenation function, and the concatenation function may be performed by the NR MAC layer, or may be replaced by a multiplexing function of the NR MAC layer.

The out-of-sequence delivery function of the NR RLC device refers to a function of directly transmitting the RLC SDUs, received from the lower layer, to an upper layer regardless of the order thereof, and may include, if one RLC SDU has been originally segmented into multiple RLC SDUs and received, a function of reassembling the multiple RLC SDUs and transmitting the same, and a function of storing the RLC SNs or PDCP SNs of the received RLC PDUs, reordering the sequence, and recording the missing RLC PDUs.

The NR MACs 1d-15 and 1d-30 may be connected to multiple NR RLC layer devices configured in one UE, and the main function of the NR MAC may include some of the following functions:
- Mapping between logical channels and transport channels
- Multiplexing/de-multiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layers 1d-20 and 1d-25 may perform operations of channel-coding and modulating upper layer data, forming the upper layer data into an OFDM symbol, transmitting the OFDM symbols via a radio channel or demodulating and channel decoding of the OFDM symbols received via the radio channel, and transferring the OFDM symbol to an upper layer.

The following relates to RRC Reconfiguration.

The purpose of this procedure is to modify an RRC connection, e.g. to establish/modify/release RBs/BH RLC channels/Uu Relay RLC channels/PC5 Relay RLC channels, to perform reconfiguration with sync, to setup/modify/release measurements, to add/modify/release SCells and cell groups, to add/modify/release conditional handover configuration, to add/modify/release conditional PSCell change or conditional PSCell addition configuration, to add/modify/LTM candidate cells. As part of the procedure, NAS dedicated information may be transferred from the Network to the UE.

RRC reconfiguration to perform reconfiguration with sync includes, but is not limited to, the following cases:
- reconfiguration with sync and security key refresh, involving RA to the Pcell/PSCell, MAC reset, refresh of security and re-establishment of RLC and PDCP triggered by explicit L2 indicators;
- reconfiguration with sync but without security key refresh, involving RA to the Pcell/PSCell, MAC reset and RLC re-establishment and PDCP data recovery (for AM DRB or AM MRB) triggered by explicit L2 indicators.
- reconfiguration with sync for DAPS and security key refresh, involving RA to the target Pcell, establishment of target MAC, and
- for non-DAPS bearer: refresh of security and re-establishment of RLC and PDCP triggered by explicit L2 indicators;
- for DAPS bearer: establishment of RLC for the target Pcell, refresh of security and reconfiguration of PDCP to add the ciphering function, the integrity protection function and ROHC function of the target Pcell;
- for SRB: refresh of security and establishment of RLC and PDCP for the target Pcell;
- reconfiguration with sync for DAPS but without security key refresh, involving RA to the target Pcell, establishment of target MAC, and
- for non-DAPS bearer: RLC re-establishment and PDCP data recovery (for AM DRB or AM MRB) triggered by explicit L2 indicators.
- for DAPS bearer: establishment of RLC for target Pcell, reconfiguration of PDCP to add the ciphering function, the integrity protection function and ROHC function of the target Pcell;
- for SRB: establishment of RLC and PDCP for the target Pcell.
- reconfiguration with sync for direct-to-indirect path switch, not involving RA at target side, involving re-establishment of PDCP /PDCP data recovery (for AM DRB) triggered by explicit L2 indicators.

In (NG)EN-DC and NR-DC, SRB3 can be used for measurement configuration and reporting, for UE assistance (re-)configuration and reporting for power savings, for IP address (re-)configuration and reporting for IAB-nodes, to (re-)configure MAC, RLC, BAP, physical layer and RLF timers and constants of the SCG configuration, and to reconfigure PDCP for DRBs associated with the S-KgNB or SRB3, and to reconfigure SDAP for DRBs associated with S-KgNB in NGEN-DC and NR-DC, and to add/modify/release conditional PSCell change configuration, provided that the (re-)configuration does not require any MN involvement, and to transmit RRC messages between the MN and the UE during fast MCG link recovery. In (NG)EN-DC and NR-DC, only measConfig, radioBearerConfig, conditionalReconfiguration, bap-Config, iab-IP-AddressConfigurationList, otherConfig and/or secondaryCellGroup are included in RRCReconfiguration received via SRB3, except when RRCReconfiguration is received within DLInformationTransferMRDC.

### Initiation

The Network may initiate the RRC reconfiguration procedure to a UE in RRC_CONNECTED. The Network applies the procedure as follows:
- the establishment of RBs (other than SRB1, that is established during RRC connection establishment) is performed only when AS security has been activated;
- the establishment of BH RLC Channels for IAB is performed only when AS security has been activated;
- the establishment of Uu Relay RLC channels and PC5 Relay RLC channels (other than SL-RLC0 and SL-RLC1) for L2 U2N Relay UE is performed only when AS security has been activated, and the establishment of PC5 Relay RLC channels for L2 U2N Remote UE (other than SL-RLC0 and SL-RLC1) is performed only when AS security has been activated;
- the addition of Secondary Cell Group and SCells is performed only when AS security has been activated;
- the reconfigurationWithSync is included in secondaryCellGroup only when at least one RLC bearer or BH RLC channel is setup in SCG;
- the reconfigurationWithSync is included in masterCellGroup only when AS security has been activated, and SRB2 with at least one DRB or multicast MRB or, for IAB, SRB2, are setup and not suspended;
- the conditionalReconfiguration for CPC is included only when at least one RLC bearer is setup in SCG;
- the conditionalReconfiguration for CHO or CPA is included only when AS security has been activated, and SRB2 with at least one DRB or multicast MRB or, for IAB, SRB2, are setup and not suspended.
- the ltm-CandidateConfig (LTM candidate cell configuration) for LTM is included only when AS security has been activated, and SRB2 with at least one DRB are setup and not suspended.

Reception of an RRCReconfiguration by the UE

The UE shall perform the following actions upon reception of the RRCReconfiguration, or upon execution of the conditional reconfiguration (CHO, CPA or CPC):

For LTM cell switch, how to generate the RRCReconfigurationComplete message is proposed in the following.

### Option 1

The RRCReconfigurationComplete message is generated upon the reception of LTM triggering MAC CE (or LTM cell switch execution) and then is sent to the target cell during LTM cell switch procedure (e.g. by Message 3 if random access procedure is performed or uplink data transmission if random access procedure is skipped (or not performed, i.e. RACH-less case). This Option 1 makes UE implementation simple because UE cannot know to which cell UE will perform LTM cell switch in advance.

Note that to reduce the processing delay for generation of RRCReconfiguration complete, UE may generate the RRCReconfigurationComplete message for each LTM candidate cell configuration upon the reception of RRCReconfiguration message including the *ltm-CandidateConfig* (LTM candidate cell configuration) in advance, i.e. UE can decide to send one of RRCReconfiguationComplete messages based on the received LTM triggering MAC CE in MAC entity for LTM cell switch procedure.
entity for LTM cell switch procedure.
   1> if the LTM cell switch is triggered from lower layers (e.g. by receiving the LTM triggering MAC CE in MAC entity or LTM cell switch execution):
      2> set the content of the *RRCReconfigurationComplete* message as follows:
         3> include the LTM candidate cell configuration/information (e.g. cell identity or UE identity or configuration index or configuration identity) for the target cell indicated from lower layers (e.g. as indicated by LTM triggering MAC CE)
if the LTM cell switch is triggered from lower layers (e.g. by receiving the LTM triggering MAC CE in MAC entity or LTM cell switch execution):
set the content of the *RRCReconfigurationComplete* message as follows:
include the LTM candidate cell configuration/information (e.g. cell identity or UE identity or configuration index or configuration identity) for the target cell indicated from lower layers (e.g. as indicated by LTM triggering MAC CE)

Note that in case this procedure is initiated due to the generation of a complete LTM candidate cell configuration, the UE should generate only one RRCReconfigurationComplete message even if it process the LTM reference configuration and a LTM candidate cell configuration. The RRCReconfigurationComplete message includes the contents for the target cell indicated by LTM triggering MAC CE.
1> if the *RRCReconfiguration* message includes the *ltm-CandidateConfig* (LTM candidate cell configuration):
   2> perform the LTM configuration procedure as specified in 3.3.1.3;
   set the content of the *RRCReconfigurationComplete* message as follows if the *RRCReconfiguration* message does not include the *ltm-CandidateConfig* (LTM candidate cell configuration):

Note that in case this procedure is initiated due to the generation of a complete LTM candidate cell configuration, the UE should generate only one RRCReconfigurationComplete message even if it process the LTM reference configuration and a LTM candidate cell configuration. The RRCReconfigurationComplete message includes the contents for the target cell indicated by LTM triggering MAC CE.
2> if the *RRCReconfiguration* includes the *masterCellGroup* containing the *reportUplinkTxDirectCurrent:*
   3> include the *uplinkTxDirectCurrentList* for each MCG serving cell with UL;
   3> include *uplinkDirectCurrentBWP-SUL* for each MCG serving cell configured with SUL carrier, if any, within the *uplinkTxDirectCurrentList;*
2> if the *RRCReconfiguration* includes the *masterCellGroup* containing the *reportUplinkTxDirectCurrentTwoCarrier:*
   3> include in the *uplinkTxDirectCurrentTwoCarrierList* the list of uplink Tx DC locations for the configured intra-band uplink carrier aggregation in the MCG;
2> if the *RRCReconfiguration* includes the *masterCellGroup* containing the *reportUplinkTxDirectCurrentMoreCarrier:*
   3> include in the *uplinkTxDirectCurrentMoreCarrierList* the list of uplink Tx DC locations for the configured intra-band uplink carrier aggregation in the MCG;
2> if the *RRCReconfiguration* includes the *secondaryCellGroup* containing the *reportUplinkTxDirectCurrent:*
   3> include the *uplinkTxDirectCurrentList* for each SCG serving cell with UL;
   3> include *uplinkDirectCurrentBWP-SUL* for each SCG serving cell configured with SUL carrier, if any, within the *uplinkTxDirectCurrentList;*
2> if the *RRCReconfiguration* includes the *secondaryCellGroup* containing the *reportUplinkTxDirectCurrentTwoCarrier:*
   3> include in the *uplinkTxDirectCurrentTwoCarrierList* the list of uplink Tx DC locations for the configured intra-band uplink carrier aggregation in the SCG;
2> if the *RRCReconfiguration* includes the *secondaryCellGroup* containing the *reportUplinkTxDirectCurrentMoreCarrier:*
   3> include in the *uplinkTxDirectCurrentMoreCarrierList* the list of uplink Tx DC locations for the configured intra-band uplink carrier aggregation in the SCG;

Note that the UE does not expect that the reportUplinkTxDirectCurrentTwoCarrier or reportUplinkTxDirectCurrentMoreCarrier is received in both masterCellGroup and in secondaryCellGroup. Network only configures at most one of reportUplinkTxDirectCurrent, reportUplinkTxDirectCurrentTwoCarrier or reportUplinkTxDirectCurrentMoreCarrier in one RRC message.
2> if the *RRCReconfiguration* message includes the *mrdc-SecondaryCellGroupConfig* with *mrdc-SecondaryCellGroup* set to *eutra-SCG:*
   3> include in the *eutra-SCG-Response* the E-UTRA *RRCConnectionReconfigurationComplete* message in accordance with TS 36.331 [10] clause 5.3.5.3;
2> if the *RRCReconfiguration* message includes the *mrdc-SecondaryCellGroupConfig* with *mrdc-SecondaryCellGroup* set to *nr-SCG:*
   3> include in the *nr-SCG-Response* the SCG *RRCReconfigurationComplete* message;
   3> if the *RRCReconfiguration* message is applied due to conditional reconfiguration execution and the *RRCReconfiguration* message does not include the *reconfigurationWithSync* in the *masterCellGroup:*
      4> include in the *selectedCondRRCReconfig* the *condReconfigld* for the selected cell of conditional reconfiguration execution;
2> if the *RRCReconfiguration* includes the *reconfigurationWithSync* in *spCellConfig* of an MCG:
   3> if the UE has logged measurements available for NR and if the RPLMN is included in *plmn-IdentityList* stored in *VarLogMeasReport:*
      4> include the *logMeasAvailable* in the *RRCReconfigurationComplete* message;
      4> if Bluetooth measurement results are included in the logged measurements the UE has available for NR:
         5> include the *logMeasAvailableBT* in the *RRCReconfigurationComplete* message;
      4> if WLAN measurement results are included in the logged measurements the UE has available for NR:
         5> include the *logMeasAvailableWLAN* in the *RRCReconfigurationComplete* message;
   3> if the *sigLoggedMeasType* in *VarLogMeasReport* is included:
      4> if T330 timer is running and the logged measurements configuration is for NR:
         5> set *sigLogMeasConfigAvailable* to *true* in the *RRCReconfigurationComplete* message;
      4> else:
         5> if the UE has logged measurements available for NR:
            6> set *sigLogMeasConfigAvailable* to *false* in the *RRCReconfigurationComplete* message;
   3> if the UE has connection establishment failure or connection resume failure information available in *VarConnEstFailReport* or *VarConnEstFailReportList* and if the RPLMN is equal to *plmn-Identity* stored in *VarConnEstFailReport* or in at least one of the entries of *VarConnEstFailReportList:*
      4> include *connEstFailInfoAvailable* in the *RRCReconfigurationComplete* message;
   3> if the UE has radio link failure or handover failure information available in *VarRLF-Report* and if the RPLMN is included in *plmn-IdentityList* stored in *VarRLF-Report;* or
   3> if the UE has radio link failure or handover failure information available in *VarRLF-Report* of TS 36.331 [10] and if the UE is capable of cross-RAT RLF reporting and if the RPLMN is included in *plmn-IdentityList* stored in *VarRLF-Report* of TS 36.331 [10]:
      4> include *rlf-InfoAvailable* in the *RRCReconfigurationComplete* message;
   3> if the UE was configured with *successHO-Config* when connected to the source Pcell; and
   3> if the applied *RRCReconfiguration* is not due to a conditional reconfiguration execution upon cell selection performed while timer T311 was running, as defined in 5.3.7.3:
      4> perform the actions for the successful handover report determination as specified in clause 5.7.10.6, upon successfully completing the Random Access procedure triggered for the *reconfigurationWithSync* in *spCellConfig* of the MCG;
   3> if the UE has successful handover information available in *VarSuccessHO-Report* and if the RPLMN is included in *plmn-IdentityList* stored in *VarSuccessHO-Report:*
      4> include *successHO-InfoAvailable* in the *RRCReconfigurationComplete* message;
2> if the *RRCReconfiguration* message was received via SRB1, but not within *mrdc-SecondaryCellGroup* or E-UTRA *RRCConnectionReconfiguration* or E-UTRA *RRCConnectionResume:*
   3> if the UE is configured to provide the measurement gap requirement information of NR target bands:
      4> if the *RRCReconfiguration* message includes the *needForGapsConfigNR;* or
      4> if the *NeedForGapsInfoNR* information is changed compared to last time the UE reported this information:
         5> include the *NeedForGapsInfoNR* and set the contents as follows:
            6> include *intraFreq-needForGap* and set the gap requirement information of intra-frequency measurement for each NR serving cell;
            6> if *requestedTargetBandFilterNR* is configured:
               7> for each supported NR band that is also included in *requestedTargetBandFilterNR,* include an entry in *interFreq-needForGap* and set the gap requirement information for that band;
            6> else:
               7> include an entry in *interFreq-needForGap* and set the corresponding gap requirement information for each supported NR band;
   3> if the UE is configured to provide the measurement gap and NCSG requirement information of NR target bands:
      4> if the *RRCReconfiguration* message includes the *needForGapNCSG-ConfigNR;* or
      4> if the *needForGapNCSG-InfoNR* information is changed compared to last time the UE reported this information:
         5> include the *NeedForGapNCSG-InfoNR* and set the contents as follows:
            6> include *intraFreq-needForNCSG* and set the gap and NCSG requirement information of intra-frequency measurement for each NR serving cell;
            6> if *requestedTargetBandFilterNCSG-NR* is configured:
               7> for each supported NR band included in *requestedTargetBandFilterNCSG-NR,* include an entry in *interFreq-needForNCSG* and set the NCSG requirement information for that band;
            6> else:
               7> include an entry for each supported NR band in *interFreq-needForNCSG* and set the corresponding NCSG requirement information;
   3> if the UE is configured to provide the measurement gap and NCSG requirement information of E-UTRA target bands:
      4> if the *RRCReconfiguration* message includes the *needForGapNCSG-ConfigEUTRA;* or
      4> if the *needForGapNCSG-InfoEUTRA* information is changed compared to last time the UE reported this information:
         5> include the *NeedForGapNCSG-InfoEUTRA* and set the contents as follows:
            6> if *requestedTargetBandFilterNCSG-EUTRA* is configured, for each supported E-UTRA band included in *requestedTargetBandFilterNCSG-EUTRA,* include an entry in *needForNCSG-EUTRA* and set the NCSG requirement information for that band; otherwise, include an entry for each supported E-UTRA band in *needForNCSG-EUTRA* and set the corresponding NCSG requirement information;
2> if this procedure is initiated due to the generation of a complete LTM candidate cell configuration:
   3> the procedure ends.

### Option 2.

Upon the reception of RRCReconfiguation, RRCReconfiguationComplete is generated corresponding to the RRCReconfiguration, and sent to the source cell (serving cell or the current cell UE received the RRCReconfiguration from). Another RRCReconfigurationComplete message is generated upon the reception of LTM triggering MAC CE (or LTM cell switch execution) and then is sent to the target cell during LTM cell switch procedure (e.g. by Message 3 if random access procedure is performed or uplink data transmission if random access procedure is skipped (or not performed, i.e. RACH-less case). This Option 2 has the network know the successful delivery of RRCReconfiguration and makes UE implementation simple because UE cannot know to which cell UE will perform LTM cell switch in advance.

Note that to reduce the processing delay for generation of RRCReconfiguration complete, UE may generate the RRCReconfigurationComplete message for each LTM candidate cell configuration upon the reception of RRCReconfiguration message including the ltm-CandidateConfig (LTM candidate cell configuration) in advance, i.e. UE can decide to send one of RRCReconfiguationComplete messages based on the received LTM triggering MAC CE in MAC entity for LTM cell switch procedure.
1> if the LTM cell switch is triggered from lower layers (e.g. by receiving the LTM triggering MAC CE in MAC entity or LTM cell switch execution):
   2> set the content of the RRCReconfigurationComplete message as follows:
      3> include the LTM candidate cell configuration/information (e.g. cell identity or UE identity or configuration index or configuration identity) for the target cell indicated from lower layers (e.g. as indicated by LTM triggering MAC CE)

Note tha in case this procedure is initiated due to the generation of a complete LTM candidate cell configuration, the UE should generate only one RRCReconfigurationComplete message even if it process the LTM reference configuration and a LTM candidate cell configuration. The RRCReconfigurationComplete message includes the contents for the target cell indicated by LTM triggering MAC CE.
1> if the RRCReconfiguration message includes the ltm-CandidateConfig (LTM candidate cell configuration):
   2> perform the LTM configuration procedure as specified in 3.3.1.3;
   2> set the content of the RRCReconfigurationComplete message as follows:

Note that in case this procedure is initiated due to the generation of a complete LTM candidate cell configuration, the UE should generate only one RRCReconfigurationComplete message even if it process the LTM reference configuration and a LTM candidate cell configuration. The RRCReconfigurationComplete message includes the contents for the target cell indicated by LTM triggering MAC CE.
2> if the RRCReconfiguration includes the masterCellGroup containing the reportUplinkTxDirectCurrent:
   3> include the uplinkTxDirectCurrentList for each MCG serving cell with UL;
   3> include uplinkDirectCurrentBWP-SUL for each MCG serving cell configured with SUL carrier, if any, within the uplinkTxDirectCurrentList;
2> if the RRCReconfiguration includes the masterCellGroup containing the reportUplinkTxDirectCurrentTwoCarrier:
   3> include in the uplinkTxDirectCurrentTwoCarrierList the list of uplink Tx DC locations for the configured intra-band uplink carrier aggregation in the MCG;
2> if the RRCReconfiguration includes the masterCellGroup containing the reportUplinkTxDirectCurrentMoreCarrier:
   3> include in the uplinkTxDirectCurrentMoreCarrierList the list of uplink Tx DC locations for the configured intra-band uplink carrier aggregation in the MCG;
2> if the RRCReconfiguration includes the secondaryCellGroup containing the reportUplinkTxDirectCurrent:
   3> include the uplinkTxDirectCurrentList for each SCG serving cell with UL;
   3> include uplinkDirectCurrentBWP-SUL for each SCG serving cell configured with SUL carrier, if any, within the uplinkTxDirectCurrentList;
2> if the RRCReconfiguration includes the secondaryCellGroup containing the reportUplinkTxDirectCurrentTwoCarrier:
   3> include in the uplinkTxDirectCurrentTwoCarrierList the list of uplink Tx DC locations for the configured intra-band uplink carrier aggregation in the SCG;
2> if the RRCReconfiguration includes the secondaryCellGroup containing the reportUplinkTxDirectCurrentMoreCarrier:
   3> include in the uplinkTxDirectCurrentMoreCarrierList the list of uplink Tx DC locations for the configured intra-band uplink carrier aggregation in the SCG;

Note that the UE does not expect that the reportUplinkTxDirectCurrentTwoCarrier or reportUplinkTxDirectCurrentMoreCarrier is received in both masterCellGroup and in secondaryCellGroup. Network only configures at most one of reportUplinkTxDirectCurrent, reportUplinkTxDirectCurrentTwoCarrier or reportUplinkTxDirectCurrentMoreCarrier in one RRC message.
2> if the RRCReconfiguration message includes the mrdc-SecondaryCellGroupConfig with mrdc-SecondaryCellGroup set to eutra-SCG:
   3> include in the eutra-SCG-Response the E-UTRA RRCConnectionReconfigurationComplete message in accordance with TS 36.331 [10] clause 5.3.5.3;
2> if the RRCReconfiguration message includes the mrdc-SecondaryCellGroupConfig with mrdc-SecondaryCellGroup set to nr-SCG:
   3> include in the nr-SCG-Response the SCG RRCReconfigurationComplete message;
   3> if the RRCReconfiguration message is applied due to conditional reconfiguration execution and the RRCReconfiguration message does not include the reconfiguration With Sync in the masterCellGroup:
      4> include in the selectedCondRRCReconfig the condReconfigId for the selected cell of conditional reconfiguration execution;
2> if the RRCReconfiguration includes the reconfigurationWithSync in spCellConfig of an MCG:
   3> if the UE has logged measurements available for NR and if the RPLMN is included in plmn-IdentityList stored in VarLogMeasReport:
      4> include the logMeasAvailable in the RRCReconfigurationComplete message;
      4> if Bluetooth measurement results are included in the logged measurements the UE has available for NR:
         5> include the logMeasAvailableBT in the RRCReconfigurationComplete message;
      4> if WLAN measurement results are included in the logged measurements the UE has available for NR:
         5> include the logMeasAvailableWLAN in the RRCReconfigurationComplete message;
   3> if the sigLoggedMeasType in VarLogMeasReport is included:
      4> if T330 timer is running and the logged measurements configuration is for NR:
         5> set sigLogMeasConfigAvailable to true in the RRCReconfigurationComplete message;
      4> else:
         5> if the UE has logged measurements available for NR:
            6> set sigLogMeasConfigAvailable to false in the RRCReconfigurationComplete message;
   3> if the UE has connection establishment failure or connection resume failure information available in VarConnEstFailReport or VarConnEstFailReportList and if the RPLMN is equal to plmn-Identity stored in VarConnEstFailReport or in at least one of the entries of VarConnEstFailReportList:
      4> include connEstFailInfoAvailable in the RRCReconfigurationComplete message;
   3> if the UE has radio link failure or handover failure information available in VarRLF-Report and if the RPLMN is included in plmn-IdentityList stored in VarRLF-Report; or
   3> if the UE has radio link failure or handover failure information available in VarRLF-Report of TS 36.331 [10] and if the UE is capable of cross-RAT RLF reporting and if the RPLMN is included in plmn-IdentityList stored in VarRLF-Report of TS 36.331 [10]:
      4> include rlf-InfoAvailable in the RRCReconfigurationComplete message;
   3> if the UE was configured with successHO-Config when connected to the source Pcell; and
   3> if the applied RRCReconfiguration is not due to a conditional reconfiguration execution upon cell selection performed while timer T311 was running, as defined in 5.3.7.3:
      4> perform the actions for the successful handover report determination as specified in clause 5.7.10.6, upon successfully completing the Random Access procedure triggered for the reconfigurationWithSync in spCellConfig of the MCG;
   3> if the UE has successful handover information available in VarSuccessHO-Report and if the RPLMN is included in plmn-IdentityList stored in VarSuccessHO-Report:
      4> include successHO-InfoAvailable in the RRCReconfigurationComplete message;
2> if the RRCReconfiguration message was received via SRB 1, but not within mrdc-SecondaryCellGroup or E-UTRA RRCConnectionReconfiguration or E-UTRA RRCConnectionResume:
   3> if the UE is configured to provide the measurement gap requirement information of NR target bands:
      4> if the RRCReconfiguration message includes the needForGapsConfigNR; or
      4> if the NeedForGapsInfoNR information is changed compared to last time the UE reported this information:
         5> include the NeedForGapsInfoNR and set the contents as follows:
            6> include intraFreq-needForGap and set the gap requirement information of intra-frequency measurement for each NR serving cell;
            6> if requestedTargetBandFilterNR is configured:
               7> for each supported NR band that is also included in requestedTargetBandFilterNR, include an entry in interFreq-needForGap and set the gap requirement information for that band;
            6> else:
               7> include an entry in interFreq-needForGap and set the corresponding gap requirement information for each supported NR band;
   3> if the UE is configured to provide the measurement gap and NCSG requirement information of NR target bands:
      4> if the RRCReconfiguration message includes the needForGapNCSG-ConfigNR; or
      4> if the needForGapNCSG-InfoNR information is changed compared to last time the UE reported this information:
         5> include the NeedForGapNCSG-InfoNR and set the contents as follows:
            6> include intraFreq-needForNCSG and set the gap and NCSG requirement information of intra-frequency measurement for each NR serving cell;
            6> if requestedTargetBandFilterNCSG-NR is configured:
               7> for each supported NR band included in requestedTargetBandFilterNCSG-NR, include an entry in interFreq-needForNCSG and set the NCSG requirement information for that band;
            6> else:
               7> include an entry for each supported NR band in interFreq-needForNCSG and set the corresponding NCSG requirement information;
   3> if the UE is configured to provide the measurement gap and NCSG requirement information of E UTRA target bands:
      4> if the RRCReconfiguration message includes the needForGapNCSG-ConfigEUTRA; or
      4> if the needForGapNCSG-InfoEUTRA information is changed compared to last time the UE reported this information:
         5> include the NeedForGapNCSG-InfoEUTRA and set the contents as follows:
            6> if requestedTargetBandFilterNCSG-EUTRA is configured, for each supported E-UTRA band included in requestedTargetBandFilterNCSG-EUTRA, include an entry in needForNCSG-EUTRA and set the NCSG requirement information for that band; otherwise, include an entry for each supported E-UTRA band in needForNCSG-EUTRA and set the corresponding NCSG requirement information;
   2> if this procedure is initiated due to the generation of a complete LTM candidate cell configuration:
      3> the procedure ends.

### LTM configuration and execution

### General

The UE shall perform the following actions based on a received LTM-CandidateConfig IE:
1> store the received ltm-ReferenceConfiguration in VarLTM-Config, if present;
1> if the LTM-CandidateConfig includes the Itm-CandidateToReleaseList:
   2> perform the LTM candidate cell release;
1> if the LTM-CandidateConfig includes the Itm-CandidateToAddModList:
   2> perform the LTM candidate cell addition or reconfiguration;
1> perform the actions to generate a complete LTM configuration;

Note that t is up to the UE implementation to postpone the generation of a complete LTM configuration until the executing of an LTM cell switch.

### LTM candidate cell release

The UE shall:
1> for each ltm-CandidateId in the ltm-CandidateToReleaseList:
   2> if the current VarLTM-Config includes an ltm-Candidate with the given ltm-CandidateId:
      3> release the ltm-Candidate from VarLTM-Config;

### LTM candidate cell addition/modification

The UE shall:
1> for each ltm-CandidateId in the ltm-CandidateToAddModList:
   2> if the current VarLTM-Config includes an ltm-Candidate with the given ltm-CandidateId:
      3> modify the ltm-Candidate within VarLTM-Config in accordance with the received ltm-Candidate;
   2> else:
      3> add the received ltm-Candidate to VarLTM-Config.

### Generation of UE LTM configuration

The purpose of this procedure is for the UE to generate a complete LTM candidate cell configuration (or LTM candidate cell configuration) for each LTM candidate cell to be stored and the LTM candidate cell configuration for the target cell indicated by lower layers (i.e. as indicated by LTM triggering MAC CE) is applied only when an indication of an LTM cell switch is received by lower layers. During the generation of a complete LTM candidate cell configuration, the current UE configuration shall not be modified.

The UE shall:
1> for each ltm-Candidate in ltm-CandidateConfigList within VarLTM-Config;
   2> store the ltm-CandidateId included in ltm-Candidate within VarLTM-UE-Config;
   2> if ltm-Candidate includes ltm-ConfigComplete;
      3> generate a complete LTM candidate cell configuration for the received ltm-Candidate according to the actions and store it in ue-LTM-Config within VarLTM-UE-Config.
   2> else:
      3> generate a complete LTM candidate cell configuration by applying ltm-Candidate on top of reference Configuration according to the actions and store it in ue-LTM-Config within VarLTM-UE-Config.

### LTM cell switch execution

Upon the indication by lower layers that an LTM cell switch procedure is triggered, the UE shall:
1> release/clear all current dedicated radio configuration except for the following:
   2> if the LTM cell switch is triggered on the MCG:
      - the MCG C-RNTI;
      - the AS security configurations associated with the master key;
   2> else, if the LTM cell switch is triggered on the SCG:
      - the SCG C-RNTI;
      - the AS security configurations associated with the secondary key;
      - the SRB1/SRB2 configurations and DRB configurations as configured by radioBearerConfig or radioBearerConfig2;
      - the UE variables VarLTM-Config and VarLTM-UE-Config.
1> release/clear all current common radio configuration;
1> use the default values specified in 9.2.3 for timers T310, T311 and constants N310, N311;
1> apply the default L1 parameter values as specified in corresponding physical layer specifications except for the following:
   - parameters for which values are provided in SIB1;
1> apply the value of the newUE-Identity as the C-RNTI for this cell group according to the LTM candidate cell configuration related to the the LTM candidate cell configuration identity as received by lower layers;
1> configure lower layers in accordance with the received spCellConfigCommon according to the LTM candidate cell configuration indicated by lower layers;
1> configure lower layers in accordance with the received rach-ConfigDedicated according to the LTM candidate cell configuration indicated by lower layers.
1> configure the PDCP entity for LTM candidate cell configuration indicated by lower layers with state variables continuation for SRBs, and with the same security configuration as the PDCP entity for the source cell group;
1> stop timer T310 for the corresponding SpCell, if running;
1> if this procedure is executed for the MCG:
   2> if timer T316 is running;
      3> stop timer T316;
1> stop timer T312 for the corresponding SpCell, if running;
1> apply the specified BCCH configuration defined in 9.1.1.1 for the target LTM candidate cell configuration;
1> acquire the MIB of the target SpCell as indicated in the LTM candidate cell configuration indicated by lower layers, if applicable;
1> apply the LTM configuration in UE-LTM-Config within VarLTM-UE-Config related to the LTM candidate cell configuration identity as received by lower layers.
1> submit the RRCReconfigurationComplete message to lower layers for transmission using the new configuration.

### RRC messages

In RRCReconfiguration message, each LTM candidate cell configuration (e.g. in CellGroupConfig IE ) can include one of the following information:
- a indicator to indicate whether to perform DL synchronization to candidate/target cell before receiving the cell switch command (MAC CE).
- LTM cell switch indicator (or Cell identity), which can indicate UE to peform LTM cell switch to the target cell (the canidate cell indicated by this indicator) upon the reception of RRCReconfiguration message. This can trigger LTM cell switch earlier than MAC CE based LTM Cell switch, i.e. it does not require the network to send MAC CE to UE in order to trigger LTM cell switch.
- LTM candidate cell configuration index (or identity) or Cell identity
- TCI state (s) or beam information (e.g. beam index, SSB index, etc)

After LTM cell switch, UE can keep the LTM candidate cell configuration, which allows subsequent LTM cell switch by MAC CE.

When the network triggers a L3-triggered handover (i.e. handover by RRCReconfiguration including reconfigurationWithSync) to UE, UE can release LTM candidate cell configurations automatically (or by RRCReconfiguration) if the handover or random access procedure to the target cell is successfully completed. As the PCell is changed after the handover and the LTM candidate cell configuration becomes not valid anymore, they should be released and can be updated.

### LTM-CandidateConfig

The IE LTM-CandidateConfig is used to provide LTM candidate cell configuration.

LTM-CandidateConfig information element:

```
-- ASN1START
             -- TAG-LTM-CANDIDATECONFIG-START
             LTM-CandidateConfig-r18 ::= SEQUENCE {
                 lte-ReferenceConfiguration-r18 OCTET STRING (CONTAINING RRCReconfiguration),
             OPTIONAL, -- Cond FirstLTM-Candidate
                 ltm-CandidateToReleaseList-r18 LTM-CandidateToReleaseList-r18
             OPTIONAL, -- Need N
                 Itm-CandidateToAddModList-r18 LTM-CandidateToAddModList-r18
             OPTIONAL, -- Need N
                 ltm-CandidateResetL2-List-r18 SetupRelease { LTM-CandidateResetL2-List-r18 }
             OPTIONAL -- Need M
              }
             LTM-CandidateToReleaseList-r18 ::= SEQUENCE (SIZE (1..maxNrofCellsLTM-r18)) OF LTM-
             CandidateId-r18 OPTIONAL -- Need N
             LTM-CandidateToAddModList-rl8 ::= SEQUENCE (SIZE (1..maxNrofCellsLTM-r18)) OF LTM-
             Candidate-r18
             LTM-Candidate-r18 ::= SEQUENCE {
                 ltm-CandidateId-r18 LTM-CandidateId-r18,
                 ltm-Config-r18 OCTET STRING (CONTAINING RRCReconfiguration),
                 Itm-ConfigComplete-r18 ENUMERATED {true}
              OPTIONAL -- Need R
              }
             LTM-CandidateResetL2-List-r18 ::= SEQUENCE (SIZE (1..maxNrofCellsLTM-r18)) OF LTM-
             Candidateld-rl8
              -- TAG-LTM-CANDIDATECONFIG-STOP
             -- ASNISTOP
     
```

| ***LTM-CandidateConfig field descriptions*** |
|---|
| ***Itm-Config*** |
| This field includes an *RRCReconfiguration* message used to configure an LTM candidate cell. This field shall include the *CellGroupConfig* IE, and it may also include the *RadioBearerConfig* IE, and *MeasConfig* IE. |
| ***ltm-ConfigComplete*** |
| This field indicates whether the LTM candidate cell configuration within *ltm-Config* is a complete configuration and thus the UE shall not use the LTM reference configuration within the field *lte-ReferenceConfiguration.* |
| ***ltm-CandidateNoResetL2-List*** |
| This field includes a list of LTM candidate cell identifiers for which the full L2 reset is needed upon an LTM cell switch. |
| ***Itm-ReferenceConfiguration*** |
| This field includes an RRCReconfiguration message used to configure a reference configuration for LTM. |

In the following, the UE behavior for MAC protocol is set out.

### MAC Control elements (MAC CE)

The first MAC CE is LTM triggering MAC CE that triggers cell switch to the target cell (i.e. one of LTM candidate cells configured by RRCReconfiguration message)

The contents of LTM triggering MAC CE can includes one of the following information:
- CFRA resources
- LTM candidate cell configuration index (or identity) or Cell identity
- Cell identity
- TCI state (s) or beam information (e.g. beam index, SSB index, etc)
- Timing Advance value (TA value)

The second MAC CE is SCell Activation/Deactivation MAC CE.

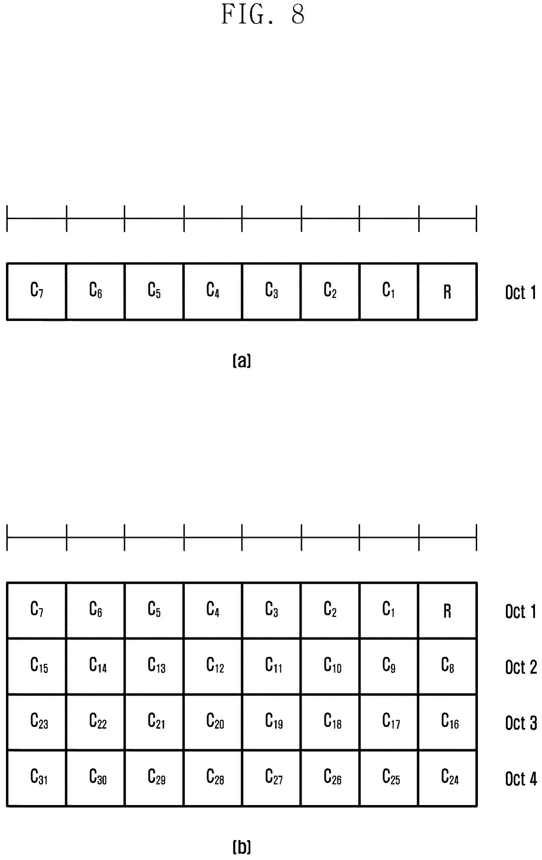

The SCell Activation/Deactivation MAC CE of one octet is identified by a MAC subheader with LCID. It has a fixed size and consists of a single octet containing seven C-fields and one R-field. The SCell Activation/Deactivation MAC CE with one octet is defined as follows (Figure 8a).

The SCell Activation/Deactivation MAC CE of four octets is identified by a MAC subheader with LCID. It has a fixed size and consists of four octets containing 31 C-fields and one R-field.

The SCell Activation/Deactivation MAC CE of four octets is defined as follows (Figure 8b).
- Ci: If there is an SCell configured for the MAC entity with SCellIndex i as configured in RRC message, this field indicates the activation/deactivation status of the SCell with SCellIndex i, else the MAC entity shall ignore the Ci field. The Ci field is set to 1 to indicate that the SCell with SCellIndex i shall be activated. The Ci field is set to 0 to indicate that the SCell with SCellIndex i shall be deactivated;
- R: Reserved bit, set to 0.

Note that if the UE receives the SCell Activation/Deactivation MAC CE for an SCell configured with TRS for fast activation of the SCell, such Tracking Reference Signal (TRS) is not used for the corresponding SCell.

The third MAC CE is Enhanced SCell Activation/Deactivation MAC CE.

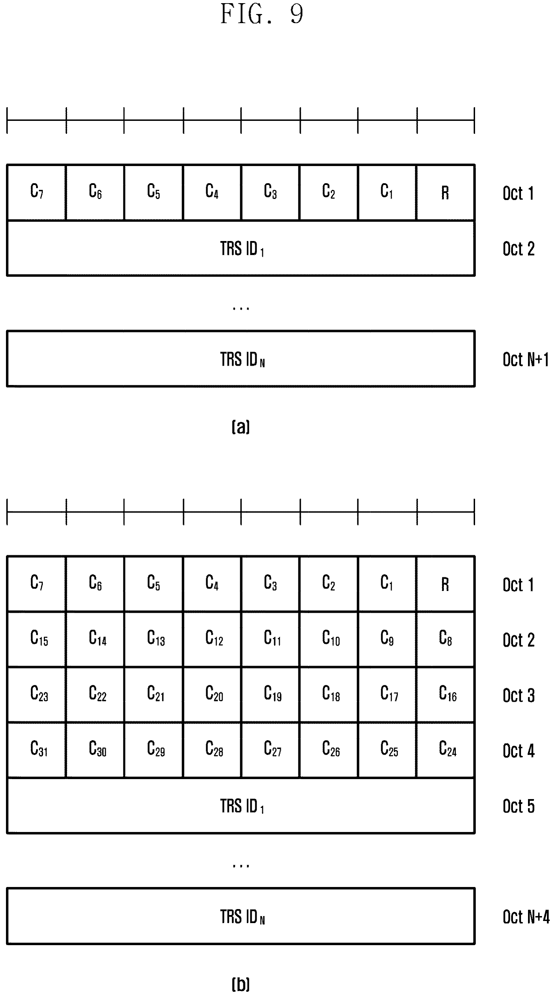

The Enhanced SCell Activation/Deactivation MAC CE with one octet Ci field is identified by a MAC subheader with eLCID. It has a variable size and consists of seven C-fields, one R-field and zero or more TRS IDj fields in ascending order based on the ScellIndex for SCells indicated by the Ci field(s) to be activated. The Enhanced SCell Activation/Deactivation MAC CE of with one octet Ci field is defined as follows (Figure 9a).

The Enhanced SCell Activation/Deactivation MAC CE with four octet Ci field is identified by a MAC subheader with eLCID. It has a variable size and consists of 31 C-fields, one R-field and zero or more TRS IDj fields in ascending order based on the ScellIndex for SCells indicated by the Ci field(s) to be activated. The Enhanced SCell Activation/Deactivation MAC CE with four octet Ci field is defined as follows (Figure 9b).
- Ci: If there is an SCell configured for the MAC entity with SCellIndex i as configured in RRC message, this field indicates the activation/deactivation status of the SCell with SCellIndex i, else the MAC entity shall ignore the Ci field. The Ci field is set to 1 to indicate that the SCell with SCellIndex i shall be activated and that a TRS IDj field is included for the SCell. The Ci field is set to 0 to indicate that the SCell with SCellIndex i shall be deactivated and that no TRS ID field is included for this SCell;
- TRS IDj: If TRS IDj is set to a non-zero value, it indicates the corresponding TRS address by scellActivationRS-Id as configured in RRC message is activated. If TRS IDj is set to zero, it indicates that no TRS is used for the corresponding SCell;
- R: Reserved bit, set to 0.

For the first, second, and third MAC CEs, rules and restrictions are provided to make UE behaviour for LTM cell switch procedure simple and efficient. As described above, LTM supports both intra-gNB-DU and intra-gNB-CU inter-gNB-DU mobility. LTM also supports inter-frequency mobility, including mobility to inter-frequency cell that is not a current serving cell. The following scenarios are supported:
- PCell change in non-CA scenario,
- PCell change without SCell change in CA scenario,
- PCell change with SCell change(s) in CA scenario, including the following cases:
   a) The target PCell/target SCell(s) is not a current serving cell (CAto-CA scenario with PCell change)
   b) The target PCell is a current SCell
   c) The target SCell is the current PCell.

To support these scenarios efficiently, some rules and restrictions for the MAC CEs may need to be defined because some scenarios cause complexity in UE implementation. For example, the current PCell can be indicated LTM cell switch to one of the current SCells and be indicated SCell activation/deactivaton, which would be a sort of race conditions.

### Option 1.

In this option, the network should not send the first MAC CE together with the second MAC CE (or the third MAC CE) to UE. In other words, the network should not include the first MAC CE and the second MAC CE (or the third MAC CE) in the same MAC PDU. By having this restriction, the network can send the commands stage by stage. For example:
- Step 1: The network can configure LTM candidate cell configuration to UE by RRC message. The network can activate or deactivate or configure (add/modify) or release SCells by RRC message or the second MAC CE or the third MAC CE to get SCells ready for LTM cell switch by activating/deactivating SCells, which may be done with LTM candidate cell configuration at the same time, i.e. by RRC message or MAC CE.
- Step 2: The network can send the first MAC CE to UE in order to trigger LTM cell switch to the target cell.

- Step 3: The network can send the second MAC CE or the third MAC CE to UE to activate or deactivate SCells (e.g. after the successful completion of LTM cell switch or when the condition is met as set out earlier)

### Option 2.

In this option, the network can send the first MAC CE together with the second MAC CE (or the third MAC CE) to UE. In other words, the network can include the first MAC CE and the second MAC CE (or the third MAC CE) in the same MAC PDU. By allowing this, the network can send the commands (LTM cell switch and SCell activcation/deactivation) altogether, which can reduce the delay. For example:
- Step 1: The network can configure LTM candidate cell configuration to UE by RRC message. The network may activate or deactivate or configure (add/modify) or release SCells by RRC message or the second MAC CE or the third MAC CE to get SCells ready for LTM cell switch by activating/deactivating SCells, which may be done with LTM candidate cell configuration at the same time, i.e. by RRC message or MAC CE. It can be also done by including the first MAC CE and the second MAC CE (or the third MAC CE) in the same MAC PDU in Step 2.
- Step 2: The network can send the first MAC CE to UE in order to trigger LTM cell switch to the target cell. Or the network can send the first MAC CE and the second MAC CE (or the third MAC CE) together to UE in the same MAC PDU to trigger LTM cell switch and SCell activation/deactivation.

For Option 2, the network can construct MAC PDU for downlink as follows:
A MAC PDU consists of one or more MAC subPDUs. Each MAC subPDU consists of one of the following:
- A MAC subheader only (including padding);
- A MAC subheader and a MAC SDU;
- A MAC subheader and a MAC CE;
- A MAC subheader and padding.

The MAC SDUs are of variable sizes.

Each MAC subheader corresponds to either a MAC SDU, a MAC CE, or padding.

A MAC subheader except for fixed sized MAC CE, padding, and a MAC SDU containing UL CCCH consists of the header fields R/F/LCID/(eLCID)/L. A MAC subheader for fixed sized MAC CE, padding, and a MAC SDU containing UL CCCH consists of the two header fields R/LCID/(eLCID).

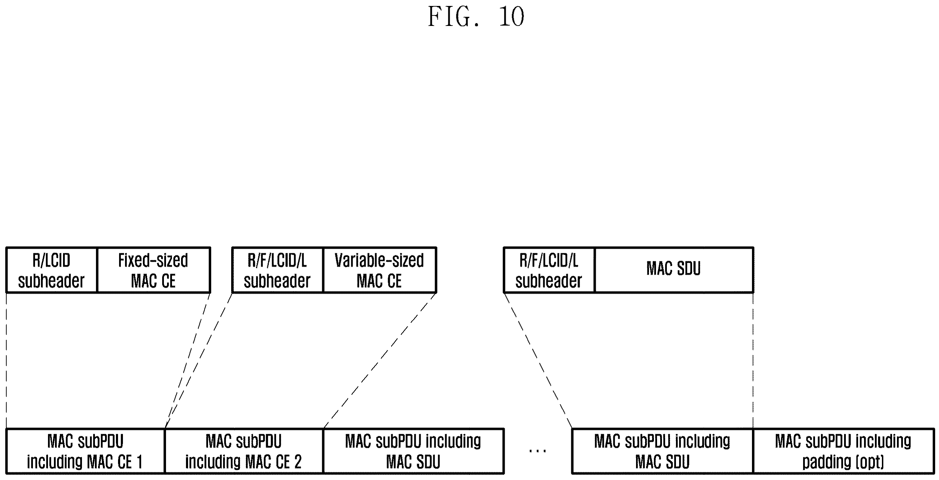

MAC CEs are placed together. DL MAC subPDU(s) with MAC CE(s) is placed before any MAC subPDU with MAC SDU and MAC subPDU with padding as depicted in Figure 10.

Upon the reception of the second MAC CE (or the third MAC CE) and the first MAC CE, UE should first process (or read) the second MAC CE (or the third MAC CE) to get SCells ready for LTM cell switch by activating/deactivating SCells. And then, UE can process (or read) the first MAC CE to trigger LTM cell switch. To make UE processing easier, the order of MAC CEs is defined as the second MAC CE (or the third MAC CE) is placed before the first MAC CE.

In another embodiment, upon the reception of the first MAC CE and the second MAC CE (or the third MAC CE), UE should first process (or read) the first MAC CE to trigger LTM cell switch. And then, UE can process (or read) the second MAC CE (or third MAC CE) to activate/deactivate SCells (e.g. after the successfully completing LTM cell switch according to the above conditions). To make UE processing easier, the order of MAC CEs is defined as the first MAC CE is placed before the second MAC CE (or the third MAC CE). The second MAC CE (or the third MAC CE) may be processed upon/after the successful completion of LTM cell switch (when the above condition is met).

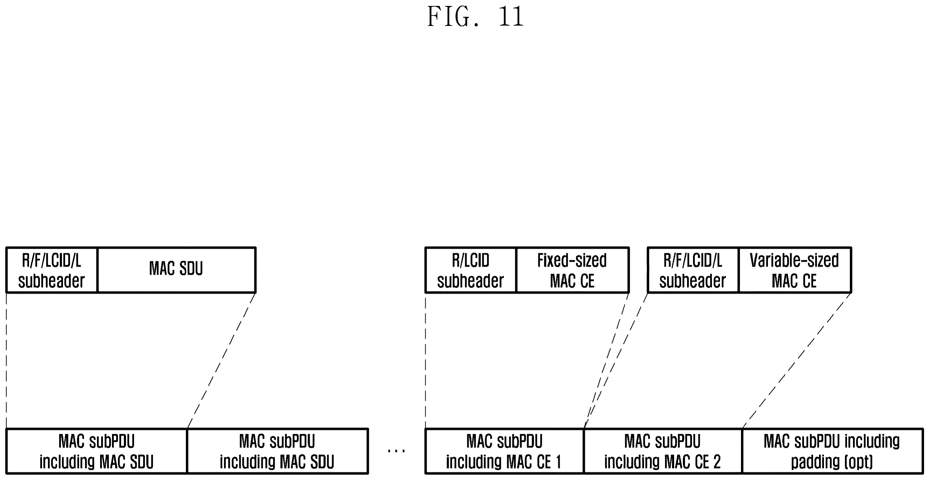

UL MAC subPDU(s) with MAC CE(s) is placed after all the MAC subPDU(s) with MAC SDU and before the MAC subPDU with padding in the MAC PDU as depicted in Figure 11 The size of padding can be zero.

A maximum of one MAC PDU can be transmitted per TB per MAC entity.

With Option 1 or Option 2, LTM supports both intra-gNB-DU and intra-gNB-CU inter-gNB-DU mobility. LTM also supports inter-frequency mobility, including mobility to inter-frequency cell that is not a current serving cell. The following scenarios are supported:
- PCell change in non-CA scenario,
- PCell change without SCell change in CA scenario,
- PCell change with SCell change(s) in CA scenario, including the following cases:
   a) The target PCell/target SCell(s) is not a current serving cell (CAto-CA scenario with PCell change)
   b) The target PCell is a current SCell
   c) The target SCell is the current PCell.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method performed by a user equipment, UE, in a wireless communication system, the method comprising:
receiving, from a base station, a radio resource control, RRC, reconfiguration message including layer 1/layer 2 triggered mobility, LTM, configuration information;
transmitting, to the base station, a first RRC reconfiguration complete message, as a response to the RRC reconfiguration message;
receiving, from the base station, a medium access control, MAC, control element, CE, to trigger an LTM cell switch procedure to a target cell;
performing the LTM cell switch procedure based on the MAC CE; and
transmitting, to the target cell, a second RRC reconfiguration complete message for a completion of the LTM cell switch procedure.

2. The method of claim 1,
wherein the LTM configuration information includes information on at least one LTM candidate, the information on the at least one LTM candidate including an LTM candidate identifier, ID, and an LTM candidate configuration corresponding to the LTM candidate ID, and
wherein the information on the at least one LTM candidate is stored based on a reception of the RRC reconfiguration message.

3. The method of claim 2,
wherein performing the LTM cell switch procedure comprises applying an LTM configuration for the target cell included in the LTM configuration information, and
wherein a successful completion of the LTM cell switch procedure is identified based on a completion of a random access procedure to the target cell.

4. The method of claim 3,
wherein, after the LTM configuration for the target cell is applied, a re-establishment of a radio link control, RLC, entity or a data recovery by a packet data convergence control, PDCP, entity of an acknowledged mode, AM, data radio bearer, DRB, is performed.

5. The method of claim 4, further comprising:
identifying information for determining whether the UE performs an L2 reset based on the LTM cell switch procedure, in the stored information on the at least one LTM candidate,
wherein the re-establishment of the RLC entity or the data recovery by the PDCP entity of the AM DRB is performed, based on the identified information.

6. The method of claim 1, further comprising:
performing an L1 measurement on at least one candidate cell; and
transmitting, to the base station, a report of the L1 measurement on the at least one candidate cell,
wherein the MAC CE is received from the base station based on the report.

7. A method performed by a base station in a wireless communication system, the method comprising:
transmitting, to a user equipment, UE, a radio resource control, RRC, reconfiguration message including layer 1/layer 2 triggered mobility, LTM, configuration information;
receiving, from the UE, a first RRC reconfiguration complete message, as a response to the RRC reconfiguration message; and
transmitting, to the UE, a medium access control, MAC, control element, CE, to trigger an LTM cell switch procedure to a target cell,
wherein the LTM cell switch procedure is performed based on the MAC CE, and
wherein the LTM cell switch procedure is completed, based on a second RRC reconfiguration complete message transmitted from the UE to the target cell.

8. The method of claim 7, further comprising:
receiving, from the UE, a report of an L1 measurement on at least one candidate cell; and
determining to trigger the LTM cell switch procedure based on the report
wherein the LTM configuration information includes information on at least one LTM candidate, the information on the at least one LTM candidate including an LTM candidate identifier, ID, and an LTM candidate configuration corresponding to the LTM candidate ID.

9. A user equipment, UE, in a wireless communication system, the UE comprising:
a transceiver; and
a controller configured to:
control the transceiver to receive, from a base station, a radio resource control, RRC, reconfiguration message including layer 1/layer 2 triggered mobility, LTM, configuration information,
control the transceiver to transmit, to the base station, a first RRC reconfiguration complete message, as a response to the RRC reconfiguration message,
control the transceiver to receive, from the base station, a medium access control, MAC, control element, CE, to trigger an LTM cell switch procedure to a target cell,
perform the LTM cell switch procedure based on the MAC CE, and
control the transceiver to transmit, to the target cell, a second RRC reconfiguration complete message for a completion of the LTM cell switch procedure.

10. The UE of claim 9,
wherein the LTM configuration information includes information on at least one LTM candidate, the information on the at least one LTM candidate including an LTM candidate identifier, ID, and an LTM candidate configuration corresponding to the LTM candidate ID, and
wherein the controller is further configured to store the information on the at least one LTM candidate based on a reception of the RRC reconfiguration message.

11. The UE of claim 10,
wherein the controller is further configured to apply an LTM configuration for the target cell included in the LTM configuration information, and identify a successful completion of the LTM cell switch procedure based on a completion of a random access procedure to the target cell.

12. The UE of claim 11,
wherein, after the LTM configuration for the target cell is applied, the controller is further configured to perform a re-establishment of a radio link control, RLC, entity or a data recovery by a packet data convergence control, PDCP, entity of an acknowledged mode, AM, data radio bearer, DRB.

13. The UE of claim 12,
wherein the controller is further configured to identify information for determining whether the UE performs an L2 reset based on the LTM cell switch procedure, in the stored information on the at least one LTM candidate, and
wherein the re-establishment of the RLC entity or the data recovery by the PDCP entity of the AM DRB is performed, based on the identified information .

14. A base station in a wireless communication system, the base station comprising:
a transceiver; and
a controller configured to:
control the transceiver to transmit, to a user equipment, UE, a radio resource control, RRC, reconfiguration message including layer 1/layer 2 triggered mobility, LTM, configuration information,
control the transceiver to receive, from the UE, a first RRC reconfiguration complete message, as a response to the RRC reconfiguration message, and
control the transceiver to transmit, to the UE, a medium access control, MAC, control element, CE, to trigger an LTM cell switch procedure to a target cell ,
wherein the LTM cell switch procedure is performed based on the MAC CE , and
wherein the LTM cell switch procedure is completed, based on a second RRC reconfiguration complete message transmitted from the UE to the target cell .

15. The method of claim 14,
wherein the controller is further configured control the transceiver to receive, from the UE, a report of an L1 measurement on at least one candidate cell, and determine to trigger the LTM cell switch procedure based on the report, and
wherein the LTM configuration information includes information on at least one LTM candidate, the information on the at least one LTM candidate including an LTM candidate identifier, ID, and an LTM candidate configuration corresponding to the LTM candidate ID.
